# EUROPEAN PATENT SPECIFICATION

(11) **EP 2 642 200 B1**
(45) Date of publication and mention of the grant of the patent: **01.11.2017**
(21) Application number: 11841271.7
(22) Date of filing: 30.03.2011
(51) Int. Cl.: F23C 10/28, F23G 5/30, F23G 5/50, F23C 10/14

(54) **FLUIDIZED BED FURNACE AND METHOD FOR PROCESSING WASTE**
WIRBELBETTOFEN UND ABFALLVERARBEITUNGSVERFAHREN
FOUR À LIT FLUIDISÉ ET PROCÉDÉ DE TRAITEMENT DE DÉCHETS

(30) Priority: 19.11.2010 JP 2010259237
(43) Date of publication of application: 25.09.2013
(73) Proprietor: Ebara Environmental Plant Co., Ltd., Tokyo 144-0042 (JP)
(72) Inventor: ISHIKAWA, Ryuichi, Tokyo 144-0042 (JP); YAMAGUCHI, Shigeru, Tokyo 144-0042 (JP); IMAMURA, Kohki, Tokyo 144-0042 (JP); NAKAMURA, Yukihiro, Tokyo 144-0042 (JP); KIRA, Makoto, Tokyo 144-0042 (JP); SAITOH, Hiroshi, Tokyo 144-0042 (JP)
(74) Representative: Carstens, Dirk Wilhelm
(86) International application number: PCT/JP2011/058049
(87) International publication number: WO 2012/066802

(56) References cited:
- JP-A- 3 255 809
- JP-A- 4 347 407
- JP-A- 2000 274 631
- JP-A- 2001 241 626
- JP-A- 2004 251 618
- JP-A- 2004 251 618
- JP-A- 2007 113 880
- JP-A- 2007 163 132
- JP-A- 2007 271 203
- US-B1- 6 709 636

## Description

### Technical Field

The present invention relates to a fluidized bed furnace and a method for treating wastes, and more particularly to a fluidized bed furnace and a waste treatment method which are capable of continuously performing appropriate treatment of wastes that are liable to cause unstable combustion.

### Background Art

As an apparatus for treating wastes, there has been known a fluidized bed furnace which can treat wastes efficiently while suppressing generation of an unburned matter, and can make the apparatus size relatively small.

The fluidized bed furnace is configured to dry, pyrolyze and combust wastes in a short period of time by utilizing large thermal capacity of a fluidized medium (sand or the like) and supplying wastes into the fluidized medium heated to a high temperature. The fluidized bed furnace is used for a fluidized bed incinerator and a fluidized bed gasification and melting furnace (comprising a fluidized bed gasification furnace and a melting combustion furnace).

When a fluidized bed furnace is used to treat wastes, it has been customary to maintain fluidization state of the fluidized medium and to keep the temperatures of a fluidized bed uniform, thereby continuing stable reactions in the furnace.

In the case where the wastes are treated in the fluidized bed, if incombustibles contained in the wastes are deposited in the fluidized bed, then the fluidized medium tends to suffer poor fluidization, and a fluidizing gas blows through the incombustible deposition area, thus possibly failing to maintain fluidization of the fluidized medium. In such case, a temperature distribution develops in the fluidized bed to cause temperature differences between measured temperature values at a plurality of locations in the fluidized bed.

Therefore, there has been disclosed a technology in which temperatures are measured at a plurality of locations in a fluidized bed, and when a temperature difference occurs, the amount of fluidizing air supplied to a location where the temperature has dropped is increased to activate fluidization of a fluidized medium, thereby improving the fluidization state of the fluidized medium for uniformizing the temperatures of the fluidized bed (see for example JP 2007 113880A).

Further, there has been known a fluidized bed furnace in which a fluidizing gas is supplied to a fluidized medium comprising sand or the like so as to make the mass velocity higher in a peripheral region than in a central region to form a moving-bed in the central region of the furnace where the fluidized medium descends and spreads and a fluidized-bed in the peripheral region of the furnace where the fluidized medium is fluidized actively. The moving-bed is configured mainly to gasify wastes, and the fluidized-bed is configured mainly to combust an unburned matter (see for example JP 2004 251618 A).

Also in the fluidized bed furnace disclosed in JP 2004 251618 A, as it is described that heat is dispersed by a circulating flow in the fluidized bed furnace, and hence the fluidized bed furnace may be operable under high loads (see Paragraph [0058] of JP 2004 251618 A), the fluidized bed furnace is based on the premise that the temperatures of the fluidized bed should be kept uniform.

When wastes are treated in the fluidized bed, the wastes are instantaneously heated from the fluidized medium that is heated to a high temperature, and undergoes reactions including drying, pyrolysis, combustion, and the like in a short period of time. Therefore, combustibles in the wastes are quickly pyrolyzed and separated from incombustibles in the fluidized bed, and clean incombustibles to which the unburned matter is not attached are discharged out of the furnace. However, inasmuch as the reactions including drying, pyrolysis, combustion, and the like occur in a short period of time, fluctuations in the quality and quantity of the wastes that are supplied to the furnace are directly linked to fluctuations in the amount of evaporated water and the amount of combustibles in the combustion, and thus it is difficult to keep combustion state stable.

Further, reference is made to US 6 709 636 B1 and JP 2000 274 631 A, each showing a fluidized bed furnace and a method for treating wastes similar to the preamble of claim 1.

### Summary of Invention

### Technical Problem

In order to suppress fluctuations in the treatment of wastes by using such a fluidized bed furnace, attempts have been made to lower the temperature of a fluidized bed or reduce the amount of a fluidizing air to suppress fluidization of the fluidized medium, thereby lowering the rate of heat transfer from the fluidized medium to the wastes. However, these attempts have been made under the condition of "keeping the temperatures of the fluidized bed uniform", that is the common practice of the fluidized bed technology.

The present inventors have obtained the following knowledge from the continuous operation of the fluidized bed furnace, over a long period of time, which has a moving-bed and a fluidized-bed as disclosed in JP 2004 251618 A, while changing the amounts of fluidizing air supplied to the moving-bed and the fluidized-bed, respectively in order to keep the temperatures of the fluidized bed having the moving-bed and the fluidized-bed uniform in treating wastes such as municipal wastes that are non-uniform in quality and quantity. Specifically, in the fluidized bed furnace having the moving-bed and the fluidized-bed as disclosed in JP 2004 251618 A, if the amount of fluidizing air in the moving-bed is increased to activate the fluidization of the moving-bed so that the temperature of the moving-bed is brought close to the temperature of the fluidized bed in order to uniformize temperatures of the entire fluidized bed, then when wastes such as municipal wastes that are non-uniform in quality and quantity are supplied into the moving-bed whose temperature has risen, it causes fluctuations in the amount of combustion and fluctuations in the amount of exhaust gases which match fluctuations in the supplied combustibles and water content, thus increasing fluctuations in the internal pressure of the furnace and making it difficult to keep optimum combusting conditions. On the other hand, if the temperature of the fluidized-bed is brought close to the temperature of the moving-bed and the amount of fluidizing air in the fluidized-bed is reduced to suppress combustion in the fluidized-bed, possibly causing the temperature of the fluidized-bed to decrease excessively, then the amount of heat required to pyrolyze the wastes in the moving-bed cannot be given to the fluidized medium. Therefore, the amount of unburned matter increases in the fluidized bed, and the unburned matter tends to be mixed with incombustibles at the time when the incombustibles are discharged from the furnace.

Based on the above knowledge, the present inventors have conceived an idea that in the case where the wastes are treated in the fluidized bed, the function of the fluidized bed can be optimized by producing a certain difference between temperatures of the fluidized bed in particular locations, rather than "keeping the temperatures of the fluidized bed uniform" that is the common practice of the fluidized bed technology, and have made the present invention accordingly. Specifically, the present inventors have noticed that in a fluidized bed furnace having a moving-bed and a fluidized-bed, it is possible to produce a certain difference between the temperature of the moving-bed and the temperature of the fluidized-bed by producing a certain difference between the flow rate of a fluidizing gas supplied to the moving-bed and the flow rate of a fluidizing gas supplied to the fluidized-bed. Then, the present inventors have repeatedly performed treatment of wastes such as municipal wastes that are non-uniform in quality and quantity, while variously changing the flow rate of the fluidizing gas supplied to the moving-bed and the flow rate of the fluidizing gas supplied to the fluidized-bed to control the temperature of the moving-bed and the temperature of the fluidized-bed individually, and have made the present invention accordingly

It is therefore an object of the present invention to provide a fluidized bed furnace and a waste treatment method which are capable of continuously performing appropriate treatment of wastes that are liable to cause unstable combustion in a fluidized bed furnace having a moving-bed and a fluidized-bed, by individually controlling the temperature of the moving-bed and the temperature of the fluidized-bed to provide respective optimum temperatures in the moving-bed and the fluidized-bed.

### Solution to Problem

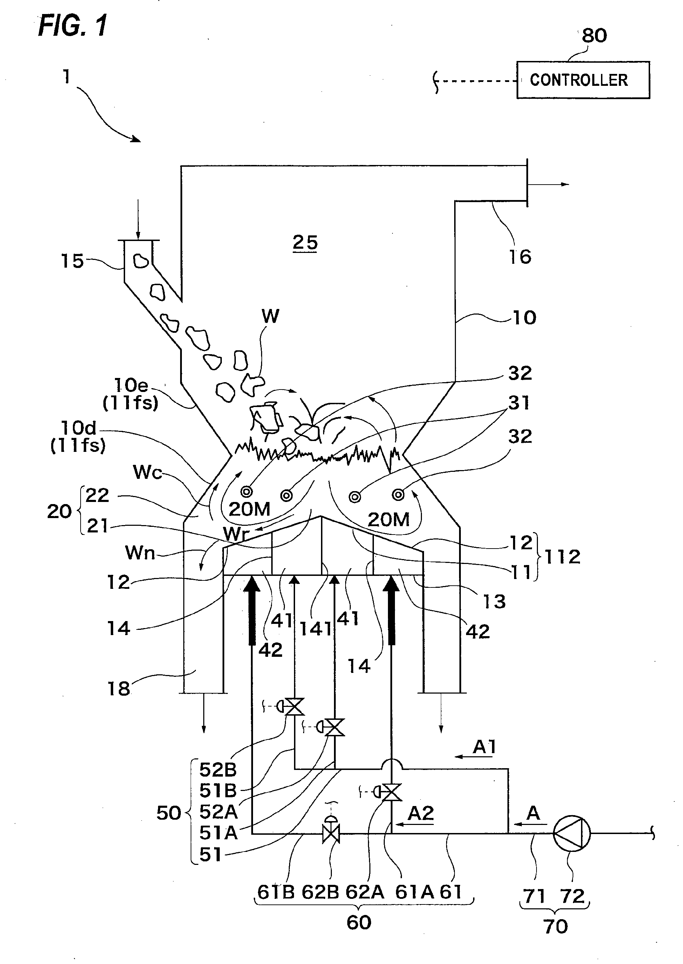

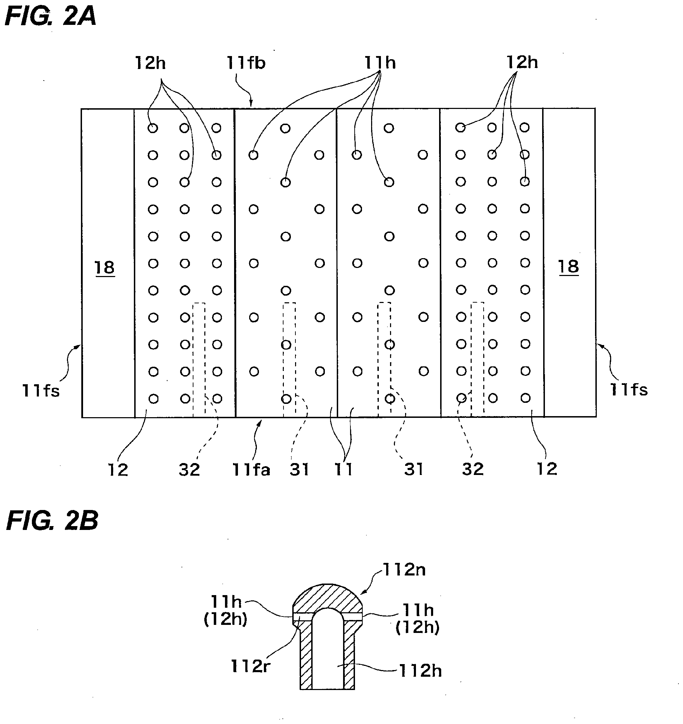

In order to achieve the above object, according to a first aspect of the present invention, for example, as shown in FIGS. 1 and 2, there is provided a fluidized bed furnace comprising: a fluidized bed 20 having a moving-bed 21 for taking supplied wastes W into a fluidized medium 20M and pyrolyzing the wastes W into a pyrolysis residue Wr while moving the wastes downwardly together with the fluidized medium 20M, and a fluidized-bed 22 for receiving the fluidized medium 20M and the pyrolysis residue Wr from the moving-bed 21 and combusting at least part of the pyrolysis residue Wr while moving the fluidized medium 20M upwardly, the fluidized medium 20M being circulated between the moving-bed 21 and the fluidized-bed 22; a moving-bed floorboard 11 having moving-bed gas supply ports 11h (see FIG. 2) formed therein for supplying a moving-bed gas A1 to fluidize the fluidized medium 20M in the moving-bed 21; a fluidized-bed floorboard 12 having fluidized-bed gas supply ports 12h (see FIG. 2) formed therein for supplying a fluidized-bed gas A2 to fluidize the fluidized medium 20M in the fluidized-bed 22, the fluidized-bed gas A2 containing oxygen used to combust the at least part of the pyrolysis residue Wr; a moving-bed gas supply means 50,70 for delivering the moving-bed gas A1 to the moving-bed 21, the moving-bed gas supply means 50,70 being capable of regulating a flow rate of the moving-bed gas A1; a fluidized-bed gas supply means 60,70 for delivering the fluidized-bed gas A2 to the fluidized-bed 22, the fluidized-bed gas supply means 60,70 being capable of regulating a flow rate of the fluidized-bed gas A2; a moving-bed temperature detector 31 for detecting a temperature of the moving-bed 21; a fluidized-bed temperature detector 32 for detecting a temperature of the fluidized-bed 22; and a controller 80 for controlling the fluidized-bed gas supply means 60,70 to regulate the flow rate of the fluidized-bed gas A2 supplied to the fluidized-bed 22 to control the temperature of the fluidized-bed 22 in order to cause the temperature detected by the fluidized-bed temperature detector 32 to become a predetermined temperature, and controlling the moving-bed gas supply means 50,70 to regulate the flow rate of the moving-bed gas A1 supplied to the moving-bed 21 to control the temperature of the moving-bed 21 in order to cause the temperature detected by the moving-bed temperature detector 31 to be lower than the temperature detected by the fluidized-bed temperature detector 32 by a predetermined temperature.

With the fluidized bed furnace having the above structure, since the temperature of the fluidized-bed is controlled to cause the temperature detected by the fluidized-bed temperature detector to be a predetermined temperature, the fluidized medium is heated in the fluidized-bed to a temperature for appropriately pyrolyzing the wastes in the moving-bed. Then, the wastes are appropriately pyrolyzed by the fluidized medium which has flowed into the moving-bed, and thus the generated pyrolysis residue becomes brittle and is separated appropriately from incombustibles, so that an unburned matter is prevented from flowing out together with the incombustibles beyond a predetermined concentration. Furthermore, since the temperature of the moving-bed is controlled to cause the temperature detected by the moving-bed temperature detector to be lower than the temperature detected by the fluidized-bed temperature detector by a predetermined temperature, the wastes can be treated as slowly as possible in the moving-bed, so that the wastes which are liable to combust unstably can continuously be treated appropriately.

According to the present invention, preferably, the temperature of the fluidized-bed is controlled to cause the temperature detected by the fluidized-bed temperature detector 32 to be a predetermined temperature based on the properties of the wastes. Here, the "predetermined temperature based on the properties of the wastes" typically refers to a temperature of the fluidized-bed for imparting an amount of heat required to pyrolyze the wastes in the moving-bed in order to dry and pyrolyze the wastes appropriately by the fluidized medium which has flowed into the moving-bed, make the generated pyrolysis residue brittle, separate the unburned matter and the incombustibles from each other in the fluidized-bed, cause the concentration of the unburned matter discharged together with the incombustibles to be lower than a predetermined concentration, heat the fluidized medium with the unburned matter ascending with the fluidized medium in the fluidized-bed and being combusted in the fluidized-bed, and appropriately pyrolyze the wastes in the moving-bed. If the concentration of water content and the rate of the fixed carbon content in the wastes become higher, the "predetermined temperature" also becomes higher. Further, the "predetermined concentration" typically refers to a concentration of the unburned matter which is allowed to be discharged out of the system and is in the range of 0 to 0.1 weight %. The concentration of the unburned matter is measured as an ignition loss. A process of measuring the ignition loss is disclosed in Environmental Agency Notice No. 95. According to the process, a specimen is dried, and then its weight loss is calculated after heating the specimen intensively for 3 hours at a temperature of 600°C ± 25°C. Environmental Agency Notice No. 95 refers to "Considerations about the guidance for general waste treatment businesses" (Japanese Environmental Agency, Environmental Agency Notice No. 95, November 4, 1977).

Further, in the fluidized bed furnace according to a preferred aspect of the present invention, the predetermined temperature of the fluidized-bed is in the range of 500°C to 650°C.

According to the present invention, since the fluidized-bed is controlled to a temperature in the range of 500°C to 650°C, the fluidized medium is heated in the fluidized-bed to a temperature capable of appropriately pyrolyzing the wastes in the moving-bed. Then, the wastes can appropriately be pyrolyzed by the fluidized medium which has flowed into the moving-bed, and thus the generated pyrolysis residue becomes brittle and is separated appropriately from the incombustibles, so that an unburned matter is prevented from flowing out together with the incombustibles beyond a predetermined concentration.

Further, in the fluidized bed furnace according to a preferred aspect of the present invention, the fluidized-bed and the moving-bed have a predetermined temperature difference in the range of 30°C to 100°C.

According to the present invention, since the temperature of the moving-bed is controlled to be lower than the temperature of the fluidized-bed by a value ranging from 30°C to 100°C, the wastes can be treated as slowly as possible in the moving-bed. Therefore, the wastes that are liable to combust unstably can continuously be treated appropriately.

Further, in the fluidized bed furnace according to a preferred aspect of the present invention, for example, as shown in FIG. 1, in the fluidized bed furnace 1 according to the first aspect of the present invention, the fluidized-beds 22 are disposed on both sides of the moving-bed 21 in vertical cross section, and the moving-bed floorboard 11 has an upwardly convex shape having a high central part and descending from the high central part toward the fluidized-beds 22 disposed on the both sides of the moving-bed 21 in vertical cross section, the moving-bed floorboard 11 and the fluidized-bed floorboard 12 adjacent to each other being disposed continuously.

With this arrangement, the fluidized medium can be smoothly circulated between the moving-bed and the fluidized-bed.

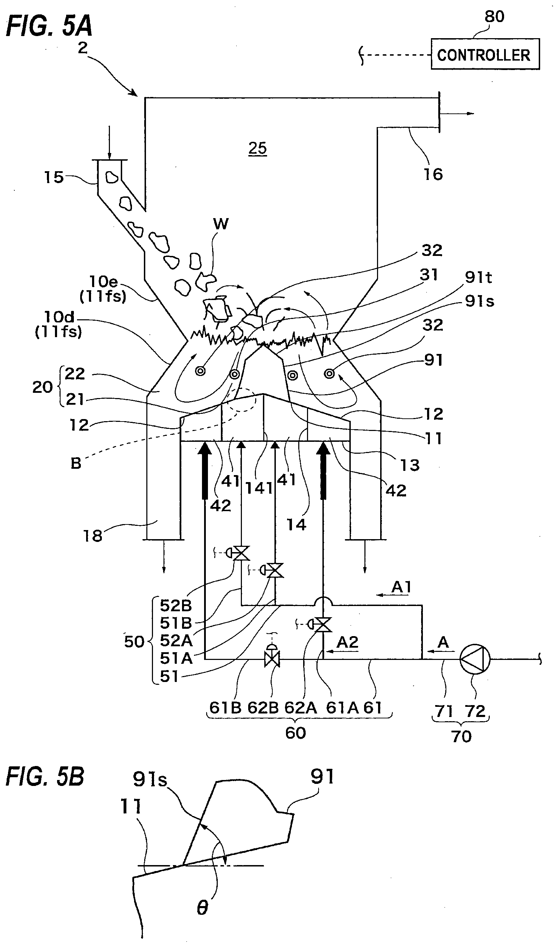

Further, in the fluidized bed furnace according to a preferred aspect of the present invention, for example, as shown in FIG. 5, in the fluidized bed furnace according to the present invention, the central part of the moving-bed floorboard 11 in vertical cross section is inclined to prevent the incombustibles from being deposited in the moving-bed 21.

With this arrangement, the wastes are prevented from being deposited in the moving-bed that is formed centrally in the furnace and performs slow reactions, so that the wastes that are liable to combust unstably can continuously be treated appropriately.

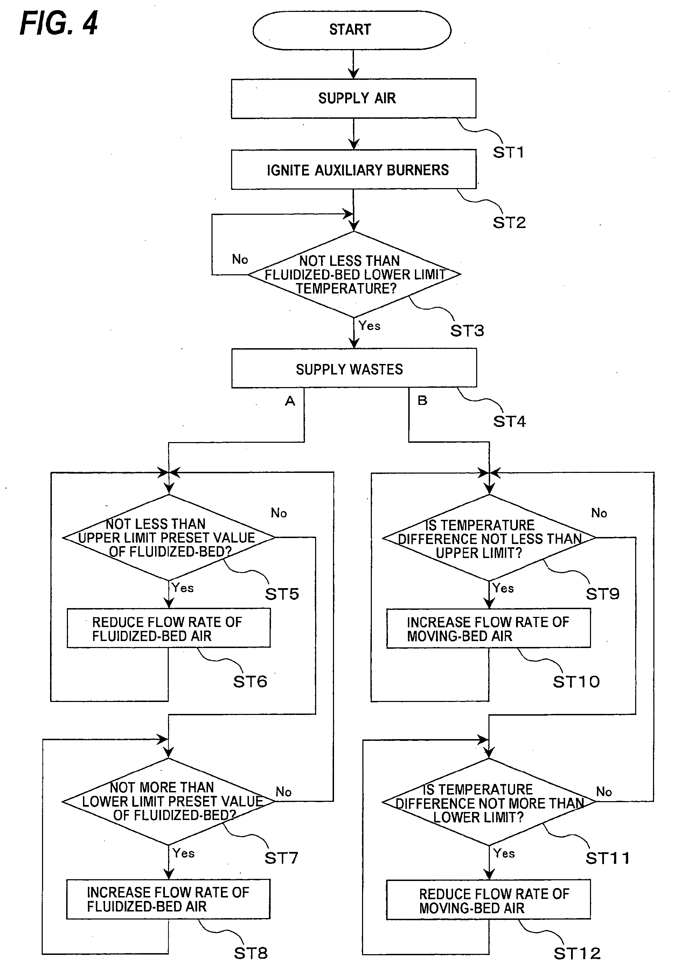

In order to achieve the above object, according to a second aspect of the present invention, for example, as shown in FIGS. 1 and 4, there is provided a method for treating wastes W in a fluidized bed 20 in which a fluidized medium 20M is circulated between a moving-bed 21 having the fluidized medium 20M descending therein and a fluidized-bed 22 having the fluidized medium 20M ascending therein, comprising: a gas supply step (ST1) for supplying a moving-bed gas A1 to the moving-bed 21 and supplying a fluidized-bed gas A2 to the fluidized-bed 22; waste supplying step (ST4) for supplying wastes W into the moving-bed 21; a thermal reaction step for pyrolyzing the supplied wastes W into a pyrolysis residue Wr in the moving-bed 21 by the heated fluidized medium 20M, and combusting at least part of the pyrolysis residue Wr in the fluidized-bed 22; a fluidized-bed gas flow rate regulating step (ST5-ST8) for regulating a flow rate of the fluidized-bed gas A2 supplied to the fluidized-bed 22 in order to cause the temperature of the fluidized-bed 22 to be a predetermined temperature; and a moving-bed gas flow rate regulating step (ST9-ST12) for regulating a flow rate of the moving-bed gas A1 supplied to the moving-bed 21 in order to cause the temperature of the moving-bed 21 to be lower than the temperature of the fluidized-bed 22 by a predetermined temperature.

With the above arrangement, while the wastes are treated as slowly as possible in the moving-bed, the fluidized medium is heated in the fluidized-bed to a temperature for appropriately pyrolyzing the wastes in the moving-bed. Then, the wastes are appropriately pyrolyzed by the fluidized medium which has flowed into the moving-bed, and thus the generated pyrolysis residue becomes brittle and is separated appropriately from incombustibles, so that an unburned matter is prevented from flowing out together with the incombustibles beyond a predetermined concentration. Therefore, the wastes which are liable to combust unstably can continuously be treated appropriately.

In the method for treating wastes according to a preferred aspect of the present invention, the predetermined temperature of the fluidized-bed is in the range of 500°C to 650°C.

According to the present invention, since the fluidized-bed is controlled to a temperature in the range of 500°C to 650°C, the fluidized medium is heated in the fluidized-bed to a temperature capable of appropriately pyrolyzing the wastes in the moving-bed. Then, the wastes can appropriately be pyrolyzed by the fluidized medium which has flowed into the moving-bed, and thus the generated pyrolysis residue becomes brittle and is separated appropriately from the incombustibles, so that an unburned matter is prevented from flowing out together with the incombustibles beyond a predetermined concentration.

Further, in the method for treating wastes according to a preferred aspect of the present invention, the fluidized-bed and the moving-bed have a predetermined temperature difference in the range of 30°C to 100°C.

According to the present invention, since the temperature of the moving-bed is controlled to be lower than the temperature of the fluidized-bed by a value ranging from 30°C to 100°C, the wastes can be treated as slowly as possible in the moving-bed. Therefore, the wastes that are liable to combust unstably can continuously be treated appropriately.

### Advantageous Effects of Invention

According to the present invention, since the temperature of the fluidized-bed is controlled to cause the temperature of the fluidized-bed to be a predetermined temperature, the fluidized medium is heated in the fluidized-bed to a temperature for appropriately pyrolyzing the wastes in the moving-bed. Then, the wastes are appropriately pyrolyzed by the fluidized medium which has flowed into the moving-bed, and thus an unburned matter is prevented from flowing out together with the incombustibles beyond a predetermined concentration. Since the flow rate of the moving-bed gas is regulated (typically so as to be smaller than the flow rate of the fluidized-bed gas) to cause the temperature of the moving-bed to be lower than the temperature of the fluidized-bed by a predetermined temperature, the wastes can be treated as slowly as possible in the moving-bed, so that the wastes which are liable to combust unstably can continuously be treated appropriately.

### Brief Description of Drawings

FIG. 1 is a vertical cross-sectional view showing the structure of a fluidized bed furnace according to a first embodiment of the present invention;
FIG. 2A is a horizontal cross-sectional view of a floorboard and peripheral components of the fluidized bed furnace according to the first embodiment of the present invention;
FIG. 2B is a vertical cross-sectional view of an air diffusion nozzle with fluidizing air supply ports formed therein;
FIG. 3 is a graph showing the relationship between vertical positions of a fluidized bed and temperatures thereof;
FIG. 4 is a flowchart of a process for controlling the fluidized bed furnace according to the embodiment of the present invention;
FIG. 5A is a vertical cross-sectional view showing the structure of a fluidized bed furnace according to a second embodiment of the present invention;
FIG. 5B is a detailed view of an encircled region B in FIG. 5A;
FIG. 6A is a graph showing time-dependent trend data of the concentrations of carbon monoxide and oxygen according to the first embodiment of the present invention; and
FIG. 6B is a graph showing time-dependent trend data of the concentrations of carbon monoxide and oxygen according to the background art.

### Description of Embodiments

A fluidized bed furnace and a method for treating wastes according to embodiments of the present invention will be described below with reference to FIGS. 1 through 6. Identical or corresponding parts are denoted by identical reference numerals throughout views, and will not be described in duplication.

First, a fluidized bed furnace 1 according to a first embodiment of the present invention will be described below with reference to FIGS. 1 and 2. FIG. 1 is a vertical cross-sectional view showing a schematic structure of the fluidized bed furnace 1. FIGS. 2A and 2B are views showing the structure of a floorboard of the fluidized bed furnace 1. FIG. 2A is a horizontal cross-sectional view showing moving-bed floorboards 11 and fluidized-bed floorboards 12, and FIG. 2B is a vertical cross-sectional view showing a gas diffusion nozzle as one aspect of a fluidizing air supply port. The fluidized bed furnace 1 includes a furnace body 10 for treating wastes W therein, a fluidized bed 20 for causing the wastes W introduced therein to react thermally, moving-bed floorboards 11 and fluidized-bed floorboards 12 which constitute a floorboard 112 for supporting the fluidized bed 20 thereon, moving-bed thermometers 31 as moving-bed temperature detectors for detecting temperatures of the fluidized bed 20 and fluidized-bed thermometers 32 as fluidized-bed temperature detectors for detecting temperatures of the fluidized bed 20, a moving-bed air supply means 50 serving as a moving-bed gas supply means, a fluidized-bed air supply means 60 serving as a fluidized-bed gas supply means, a fluidizing air supply means 70 serving as the moving-bed gas supply means and the fluidized-bed gas supply means, and a controller 80. The fluidizing air supply means 70 doubles as a component of the moving-bed gas supply means and a component of the fluidized-bed gas supply means.

The wastes W that are treated in the fluidized bed furnace 1 are assumed to be typically materials such as municipal wastes, sludge, or wood debris that are non-uniform in quality and quantity and liable to combust unstably. In the present embodiment, the wastes W will be described as municipal wastes. The wastes W generally comprise water content, combustibles, and ash content (including incombustibles). By thermal reaction, the water content evaporates and the combustibles partly volatilizes as a combustible gas (pyrolysis gas), leaving pyrolysis residue Wr. Substances that are left after water content evaporates and the combustible gas volatilizes from the wastes W, i.e., an unburned matter (char) Wc and incombustibles Wn constitute the pyrolysis residue Wr. It is desirable that of the pyrolysis residue Wr, the unburned matter (char) Wc is separated from the incombustibles Wn in the fluidized-bed 22, and is partly combusted in the fluidized-bed 22 and is delivered as a combustion gas and a fine unburned matter (char) Wc together with the fluidizing air to a freeboard 25. However, the unburned matter (char) Wc may sometimes not be separated from the incombustibles Wn. Further, the wastes W are liable to be combusted unstably because combustible, water content, and the like contained therein fluctuate due to the season and time zone of the wastes to be supplied into the fluidized bed furnace 1 and also due to geographic factors or the like. Since the amount of oxygen required to combust the wastes W fluctuates because the combustible content fluctuates and the amount of heat required to dry and pyrolyze the wastes W fluctuates because the water content fluctuates, these fluctuations are responsible for fluctuations in the temperature of the fluidized bed 20. Thus, it is generally considered that the wastes W are difficult to combust stably.

The fluidized bed 20 is a bed which is formed by an accumulation of a fluidized medium 20M composed typically of sand such as silica sand. The fluidized bed 20 comprises the moving-bed 21 and the fluidized-bed 22 which have different movement states of the fluidized medium M due to different amounts of air supplied thereto, as described later. The moving-bed 21 is a bed in which the fluidized medium 20M moves downwardly at a relatively low speed, whereas the fluidized-bed 22 is a bed in which the fluidized medium 20M moves upwardly. In the overall fluidized bed 20, the fluidized medium 20M moves from the moving-bed 21 to the fluidized-bed 22 in the lower region of the fluidized bed 20 and the fluidized medium 20M moves from the fluidized-bed 22 to the moving-bed 21 in the upper region of the fluidized bed 20. Therefore, the fluidized medium 20M circulates between the moving-bed 21 and the fluidized-bed 22. According to the present embodiment, in the entire vertical cross section of the fluidized bed 20 as viewed in front elevation as shown in FIG. 1, the moving-bed 21 is formed centrally in the fluidized bed 20, whereas the fluidized-beds 22 are formed on both sides of the moving-bed 21. In the lower region of the fluidized bed 20, the fluidized medium 20M is divided from the central moving-bed 21 into the fluidized-beds 22 on the both sides of the central moving-bed 21. In the upper region of the fluidized bed 20, the fluidized medium 20M is collected from the fluidized-beds 22 on both sides of the central moving-bed 21 into the central moving-bed 21. In a vertical cross section as viewed in side elevation, the moving-bed 21 or the fluidized-bed 22 appears depending on the position in the vertical cross section. The moving-bed 21 and the fluidized-bed 22 are distinguished from each other in terms of the movement of the fluidized medium 20M and their respective functions. Although the moving-bed 21 and the fluidized-bed 22 are physically composed of the same fluidized medium 20M, the temperature of the fluidized medium 20M in the moving-bed 21 and the temperature of the fluidized medium 20M in the fluidized-bed 22 are different from each other.

The furnace body 10 has a tubular shape which is substantially rectangular in horizontal cross-section (see FIG. 2A), with a pair of side faces 11fs being partly concave (see FIG. 1). As shown in FIG. 2A, in horizontal cross-section, the pair of the side faces 11fs are joined to each other by a front face 11fa and a rear face 11fb. In the present embodiment, it is assumed in the horizontal cross-section that a direction in which the front face 11fa extends is a width direction, and a direction in which the side face 11fs extends is a depth direction. Each of the concave portions of the furnace body 10 is formed by a slanted plate 10d inclined inwardly of the furnace body 10 from the lower part to the upper part and an extension plate 10e disposed above the slanted plate 10d and inclined outwardly of the furnace body 10 from the lower part to the upper part (see FIG. 1). Each of the slanted plates 10d functions as a deflector for assisting movement of the fluidized medium 20M of the fluidized-bed 22 inwardly of the furnace body 10 while the fluidized medium 20M ascends. The furnace body 10 is arranged such that the junctions between the slanted plates 10d and the extension plates 10e (portion where the horizontal width of the furnace body 10 is the smallest) are positioned near the upper end of the fluidized bed 20 when the fluidized bed 20 is formed in the furnace body 10. Although the slanted plates 10d (and the extension plates 10e) may be eliminated, the slanted plates 10d (and the extension plates 10e) should preferably be provided from the standpoint of promoting the movement of the fluidized medium 20M from the fluidized-bed 22 to the moving-bed 21.

The furnace body 10 has a supply port 15 for introducing the wastes W, an exhaust port 16 for discharging gases that are produced when the wastes W reacts thermally, and incombustible passages 18 for discharging incombustibles contained in the wastes W. In the case where the furnace body 10 serves as an incinerator, a combustion gas produced by combusting a combustible gas with secondary air supplied to the freeboard 25 is discharged from the exhaust port 16. In the case where the furnace body 10 serves as a gasification furnace, a combustible gas is discharged from the exhaust port 16. The supply port 15 is provided in the side face 11fs at the location above the upper end of the extension plate 10e, and a chute for guiding the introduced waste W is provided to drop the wastes W onto the moving-bed 21. The exhaust port 16 is formed in the upper end of the side face 11fs of the furnace body 10 so as to discharge the gas horizontally. The incombustible passages 18 are formed in the lower portions of the fluidized-beds 22 along the respective side faces 11fs so as to extend downwardly.

The moving-bed floorboards 11 and the fluidized-bed floorboards 12 are disposed between the two incombustible passages 18 that are disposed on both sides of the furnace body 10. As shown in FIG. 1, the moving-bed floorboards 11 are disposed below the moving-bed 21, and the fluidized-bed floorboards 12 are disposed below the fluidized-beds 22. In other words, the moving-bed 21 is formed above the moving-bed floorboards 11, and the fluidized-beds 22 are formed above the fluidized-bed floorboards 12. The moving-bed floorboards 11 are disposed centrally in the width direction of the furnace body 10, and each of the fluidized-bed floorboards 12 is disposed between the moving-bed floorboard 11 and the incombustible passage 18. The moving-bed floorboards 11 are inclined in such a gradient that they are the highest at the center in the width direction of the furnace body 10 and are gradually lowered toward the side faces 11fs. The fluidized-bed floorboards 12 extend continuously from the moving-bed floorboards 11 at the same gradient as the moving-bed floorboards 11. Specifically, in the present embodiment, each of the moving-bed floorboards 11 and each of the fluidized-bed floorboards 12 are disposed on the same plane that is inclined outwardly from the center of the furnace body 10. Since a downward gradient is formed from the moving-bed floorboard 11 to the fluidized-bed floorboard 12, the fluidized medium 20M moves smoothly from the moving-bed 21 to the fluidized-bed 22. In the present embodiment, the moving-bed floorboard 11 and the fluidized-bed floorboard 12 are inclined to the horizontal plane preferably at an angle ranging from about 10° to 20° (typically about 15°). Further, in the present embodiment, an area ratio of the moving-bed floorboard 11 to the fluidized-bed floorboard 12 is substantially equal, and the respective lengths in the width direction of the moving-bed floorboard 11 and the fluidized-bed floorboard 12 on the same plane are about 0.7 m. Hereinafter, the moving-bed floorboard 11 and the fluidized-bed floorboard 12 may also be collectively referred to as "floorboard 112".

Moving-bed air supply ports 11h (see FIG. 2A) are formed in the moving-bed floorboards 11 as moving-bed gas supply ports for supplying moving-bed air A1 as a moving-bed gas to the fluidized medium 20M. The moving-bed air supply ports 11h are typically formed by a cylindrical air diffusion nozzle 112n (see FIG. 2B). The air diffusion nozzle 112n has a cavity 112h defined therein which has an open lower end and a closed upper end, and a plurality of (about 4 to 16) fluid passages 112r are formed in a cylindrical side wall of the air diffusion nozzle 112n and extend radially from an upper portion of the cavity 112h. The openings of the fluid passages 112r which appear on the side wall of the air diffusion nozzle 112n serve as the moving-bed air supply ports 11h. As shown in FIG. 2A, the moving-bed air supply ports 11h (air diffusion nozzle 112n) are provided at suitable intervals. Fluidized-bed air supply ports 12h (see FIG. 2A) as fluidized-bed gas supply ports for supplying fluidized-bed air A2 as a fluidized-bed gas to the fluidized medium 20M are formed in the fluidized-bed floorboards 12. The fluidized-bed air supply ports 12h are also typically formed by an air diffusion nozzle 112n, as with the moving-bed air supply ports 11h. The fluidized-bed air supply ports 12h are provided at suitable intervals. The fluidized-bed air supply ports 12h are larger in number than the moving-bed supply ports 11h per unit area. Typically, the number of fluidized-bed air supply ports 12h is about twice the number of moving-bed air supply ports 11h.

A bottom plate 13 is provided below the floorboard 112 and spaced from the floorboard 112 to form a space between the floorboard 112 and the bottom plate 13. In the space between the floorboard 112 and the bottom plate 13, there are provided partition plates 14 extending downwardly from the boundaries between the moving-bed floorboards 11 and the fluidized-bed floorboards 12 to the bottom plate 13. By partitioning the space between the floorboard 112 and the bottom plate 13 by the partition plates 14, moving-bed air chambers 41 are formed below the moving-bed floorboards 11, and fluidized-bed air chambers 42 are formed below the fluidized-bed floorboards 12. In the present embodiment, there are two moving-bed air chambers 41 divided by a partition plate 141 which extends downwardly from a highest central portion between the moving-bed floorboards 11 to the bottom plate 13, from the standpoint of dividing the area for adjusting the amount of moving-bed air A1 supplied to the moving-bed 21. However, the partition plate 141 may be eliminated to provide only one moving-bed air chamber 41.

Moving-bed air pipes 51A, 51B are connected to the two moving-bed air chambers 41, respectively to supply the moving-bed air A1 from outside of the furnace into the moving-bed air chambers 41. The two moving-bed air pipes 51A, 51B are branched from a single moving-bed air pipe 51 at the upstream side of the flow direction of the moving-bed air A1. If there is no need in the description below to distinguish between the two moving-bed air pipes 51A, 51B, they will collectively be referred to as "moving-bed air pipe 51". The moving-bed air pipes 51A, 51B have respective moving-bed air regulating valves 52A, 52B for regulating the amount of moving-bed air A1 that flows in the moving-bed air pipes 51A, 51B. If there is no need in the description below to distinguish between the two moving-bed air regulating valves 52A, 52B, they will collectively be referred to as "moving-bed air regulating valve 52". The moving-bed air pipe 51 and the moving-bed air regulating valve 52 jointly constitute a moving-bed air supply means 50. On the other hand, fluidized-bed air pipes 61A, 61B are connected to the two fluidized-bed air chambers 42, respectively to supply the fluidized-bed air A2 from outside of the furnace into the fluidized-bed air chambers 42. The two fluidized-bed air pipes 61A, 61B are branched from a single fluidized-bed air pipe 61 at the upstream side of the flow direction of the fluidized-bed air A2. If there is no need in the description below to distinguish between the two fluidized-bed air pipes 61A, 61B, they will collectively be referred to as "fluidized-bed air pipe 61". The fluidized-bed air pipes 61A, 61B have respective fluidized-bed air regulating valves 62A, 62B for regulating the amount of fluidized-bed air A2 that flows in the fluidized-bed air pipes 61A, 61B. If there is no need in the description below to distinguish between the two fluidized-bed air regulating valves 62A, 62B, they will collectively be referred to as "fluidized-bed air regulating valve 62". The fluidized-bed air pipe 61 and the fluidized-bed air regulating valve 62 jointly constitute a fluidized-bed air supply means 60. The moving-bed air pipe 51 and the fluidized-bed air pipe 61 have respective uppermost stream ends that are connected to a fluidizing air pipe 71. A fluidizing air blower 72 disposed in the fluidizing air pipe 71 to deliver fluidizing air A under pressure. The fluidizing air A is divided into the moving-bed air A1 and the fluidized-bed air A2. The fluidizing air pipe 71 and the fluidizing air blower 72 jointly constitute a fluidizing air supply means 70.

The moving-bed thermometer 31 may be positioned in a width direction within a range from the peak of the moving-bed floorboard 11 (the upper end of the partition plate 141) to the boundary between the moving-bed floorboard 11 and the fluidized-bed floorboard 12 (this range will hereinafter be referred to as "width of the moving-bed floorboard 11). It is desirable that the moving-bed thermometer 31 should be positioned in a range from the center of the width of the moving-bed floorboard 11 to ± 5 % of the width of the moving-bed floorboard 11. Since there are two boundaries between the moving-bed floorboards 11 and the fluidized-bed floorboards 12, there are provided two moving-bed thermometers 31. However, there may be provided either one of them. In the present embodiment, the width of the moving-bed floorboard 11 is 750 mm, and the moving-bed thermometer 31 has a temperature detecting element disposed at a position, close to the center of the moving-bed floorboard 11, which is 35 mm (4.7 %) spaced from the center of the width of the moving-bed floorboard 11. The fluidized-bed thermometers 32 may be positioned in a width direction within the range of the width of the fluidized-bed floorboard 12. It is desirable that a total of two fluidized-bed thermometers 32 should be provided to detect the temperature of the fluidized-bed 22 at a position which is spaced about 30 % of the width of the fluidized-bed floorboard 12 toward the moving-bed 21 from the center of the width of the fluidized-bed floorboard 12. In the present embodiment, the width of the fluidized-bed floorboard 12 is 750 mm, and the fluidized-bed thermometer 32 has a temperature detecting element disposed at a position which is 225 mm (30 %) spaced toward the moving-bed 21 from the center of the width of the fluidized-bed floorboard 12. Each of the moving-bed thermometer 31 and the fluidized-bed thermometer 32 typically comprises a thermocouple housed in a protective pipe and has a temperature detecting element inserted from the front face 11 fa to a depth ranging from 100 mm to 1000 mm, preferably 300 mm to 700 mm. In the present embodiment, the temperature detecting element of each of the moving-bed thermometer 31 and the fluidized-bed thermometer 32 is provided at a position that is 520 mm deep from the front face 11fa. The moving-bed thermometer 31 and the fluidized-bed thermometer 32 should preferably be in such a position in the heightwise direction that their temperature detecting elements are disposed in a range between an upper limit represented by the position (Ho) of the upper surface of the fluidized bed 20 at the time the fluidized medium 20M is at rest and a lower limit represented by about one-half ((1/2)Ho) of the position of the upper surface of the fluidized bed 20 at the time the fluidized medium 20M is at rest, in the widthwise position where the height of the fluidized bed 20 is minimum (the position of the peak of the moving-bed floorboards 11 in the present embodiment). Even if each temperature detecting element is disposed at the upper surface of the fluidized bed 20 at the time the fluidized medium 20M is at rest, when the fluidized medium 20M is fluidized, the fluidized bed 20 entraps air bubbles therein and has its volume increased, thereby raising its upper surface to make the temperature detecting element immersed in the fluidized bed 20. In the present embodiment, the temperature detecting elements of the moving-bed thermometer 31 and the fluidized-bed thermometer 32 are provided at a position which is lower by 270 mm than the upper surface of the fluidized bed 20 whose minimum height is 660 mm at the time the fluidized bed 20 is at rest. Auxiliary burners (not shown) for heating the fluidized medium 20M at the time of starting operation of the fluidized bed furnace 1 are disposed at the rear face 11fb side.

The controller 80 is an equipment for controlling operation of the fluidized bed furnace 1. The controller 80 is connected to the moving-bed thermometers 31 and the fluidized-bed thermometers 32 by respective signal cables, and are configured to receive signals representing temperatures that are detected by the thermometers 31, 32. Further, the controller 80 has a computing function for computing preset relationships (functions) based on the temperature signals from the thermometers 31, 32. The controller 80 is also connected to the moving-bed air regulating valves 52 and the fluidized-bed air regulating valves 62 by respective signal cables, and send signals to the moving-bed air regulating valves 52 and the fluidized-bed air regulating valves 62 to adjust the opening degrees of the moving-bed air regulating valves 52 and the fluidized-bed air regulating valves 62. The controller 80 stores, in advance, the relationship between the valve opening degrees and the discharge flow rates of air with respect to the moving-bed air regulating valves 52 and the fluidized-bed air regulating valves 62.

Next, operation of the fluidized bed furnace 1 will be described with reference to FIGS. 1 and 2. Before starting operation of the fluidized bed furnace 1, the auxiliary burners (not shown) are ignited to heat the fluidized medium 20M. At this time, the controller 80 activates the fluidizing air blower 72 to introduce the moving-bed air A1 and the fluidized-bed air A2 into the furnace body 10 for assisting in the combustion by the auxiliary burners (not shown). When the temperature detected by the moving-bed thermometer 31 reaches a temperature (400°C or higher in the present embodiment) at which the wastes W can be pyrolyzed, the fluidized bed furnace 1 is ready to accept the wastes M into the fluidized bed 20.

When the fluidized bed furnace 1 is ready to accept the wastes M into the fluidized bed 20, the wastes W are supplied from the supply port 15. Typically, the wastes W are continuously supplied by a constant-rate supply device (not shown). Since the wastes W that are supplied into the fluidized bed furnace 1 for treatment are composed of various materials, their quality and quantity tend to vary. The wastes W that are supplied from the supply port 15 slides down the chute and falls onto an upper portion of the moving-bed 21. At this time, the controller 80 adjusts the opening degrees of the moving-bed air regulating valves 52 and the fluidized-bed air regulating valves 62 to regulate the flow rates of the moving-bed air A1 and the fluidized-bed air A2. Typically, the flow rate of the fluidized-bed air A2 is regulated by the fluidized-bed air regulating valve 62 to supply the fluidized-bed 22 with air (oxygen) for carrying the fluidized medium 20M in the fluidized-bed 22 upwardly to the moving-bed 21 and combusting the unburned matter (char) Wc according to given standards. The phrase "combusting the unburned matter (char) Wc according to given standards" means combusting the unburned matter (char) Wc in the fluidized bed 12 in order to lower the concentration of the unburned matter in the fluidized bed 20 so that any unburned matter in excess of a predetermined concentration will not be discharged together with the incombustibles Wn from the fluidized bed furnace 1 and also in order for the fluidized medium 20M to keep an amount of heat large enough to appropriately pyrolyze the wastes W in the moving-bed 21 with the fluidized medium 20M which has moved from the fluidized-bed 22 into the moving-bed 21.

The "predetermined concentration" of the unburned matter in the above phrase "any unburned matter in excess of a predetermined concentration will not be discharged together with the incombustibles Wn from the fluidized bed furnace 1" is typically managed to fall in the range from 0 to 0.1 weight % to prevent the concentration of dioxins in the incombustibles Wn from increasing because dioxins are likely to be contained in the unburned matter (char) Wc when the unburned matter (char) Wc is attached to and carried by the fluidized medium 20M and the incombustibles Wn.

In order to prevent any unburned matter in excess of a predetermined concentration from being discharged together with the incombustibles Wn from the fluidized bed furnace 1, the wastes W in the moving-bed 21 is pyrolyzed to generate a pyrolysis residue Wr which is brittle enough to separate the unburned matter (char) Wc appropriately from the incombustibles Wn when the wastes W are moved into the fluidized-bed 22 (appropriate pyrolysis of the wastes W). On the other hand, the moving-bed air A1 is regulated to a flow rate for fluidizing and circulating the fluidized medium 20M in the moving-bed 21 to and from the fluidized-bed 22. The controller 80 adjusts the mass flow rate of the moving-bed air A1 to a level smaller than the mass flow rate of the fluidized-bed air A2. In the present embodiment, the mass flow rate of the moving-bed air A1 is adjusted in the range of 0.5 to 1.5 Gmf, whereas the mass flow rate of the fluidized-bed air A2 is adjusted in the range of about 1.5 to 5 Gmf. The mass flow rate at the time of starting fluidization of the fluidized medium 20M is 1 Gmf.

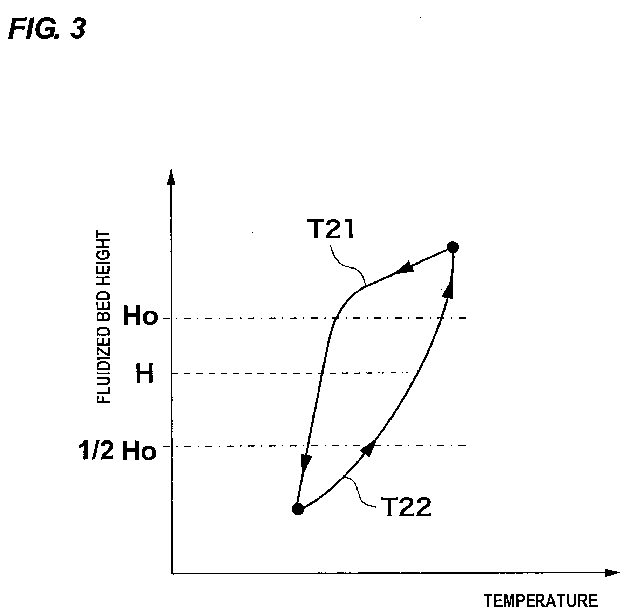

The wastes W that are supplied onto the upper portion of the moving-bed 21 moves downwardly together with the fluidized medium 20M which is fluidized by supplying the moving-bed air A1. At this time, the wastes W are dried and pyrolyzed by the heat of the fluidized medium 20M, and water content in the wastes W is evaporated and a combustible gas is generated from the combustibles in the wastes W, thus turning the wastes W into a brittle pyrolysis residue Wr. FIG. 3 is a graph showing the relationship between vertical positions of the fluidized bed 20 and temperatures of the fluidized bed 20. The vertical axis of the graph represents the vertical positions of the fluidized bed 20 and the horizontal axis of the graph represents the temperatures of the fluidized bed 20. A line T21 indicates the relationship in the moving-bed 21, whereas a line T22 indicates the relationship in the fluidized-bed 22. In FIG. 3, "Ho" represents the position of the upper surface of fluidized bed 20 at the time the fluidized medium 20M is at rest, and "1/2Ho" represents one-half of the position of the upper surface of the fluidized bed 20 at the time the fluidized medium 20M is at rest. Since the fluidized medium 20M is cooled by a latent heat generated when the water content is evaporated after the wastes W are supplied, the temperature of the moving-bed 21 is quickly lowered in the upper portion of the moving-bed 21, and is gradually lowered toward the lower part of the moving-bed 21 (see the line T21 in FIG. 3). While the temperature of the moving-bed 21 is being gradually lowered, a combustible gas is generated. The pyrolysis residue Wr typically contains the incombustibles Wn and the unburned matter (char) Wc which becomes brittle by the pyrolysis. When the pyrolysis residue Wr that is generated in the moving-bed 21 moves with the fluidized medium 20M and reaches the moving-bed floorboards 11, the pyrolysis residue Wr is directed along the slanted moving-bed floorboards 11 toward the fluidized-beds 22. When the pyrolysis residue Wr reaches the fluidized-bed 22, the unburned matter (char) Wc is separated from the incombustibles Wn by the fluidized-bed air A2, and the remaining incombustibles Wn from which the unburned matter (char) Wc has been separated is directed together with part of the fluidized medium 20M toward the incombustible passages 18. At this time, since the furnace body 10 has the rectangular horizontal cross-sectional shape and the width of the fluidized-bed floorboard 12 is constant, a moving distance for separating the unburned matter (char) Wc from the incombustibles Wn can be ensured. Therefore, the incombustibles Wn in the pyrolysis residue Wr is reliably moved by a certain distance in the fluidized-bed 22, so that the unburned matter (char) Wc and the incombustibles Wn can appropriately be separated from each other. The incombustibles Wn flows together with part of the fluidized medium 20M into the incombustible passages 18, and is then discharged from the fluidized bed furnace 1. The discharged incombustibles Wn are collected in an unoxidized state and with no unburned matter (char) being attached in an incombustible separator (not shown). After the incombustibles Wn have been collected by the incombustible separator, the fluidized medium 20M is returned into the furnace body 10 by a fluidized medium circulator (not shown).

If the area in the horizontal cross section of the fluidized bed is changed depending on the treatment capacity of the fluidized bed furnace, then the width of the fluidized-bed floorboard 12 should be constant, but the depth of the fluidized-bed floorboard 12 should be changed.

On the other hand, the unburned matter (char) Wc which has been separated from the incombustibles Wn moves upwardly with the fluidized medium 20M which is fluidized by supplying the fluidized-bed air A2. At this time, the unburned matter (char) Wc is combusted by the supplied fluidized-bed air A2 to heat the fluidized medium 20M and generate a combustion gas, thus turning itself into an unburned matter (char) and ash particles that are fine enough to be carried by the gas. In the fluidized-bed 22, since the temperature of the fluidized medium gradually rises by combustion of the unburned matter (char) Wc, the temperature of the fluidized-bed 22 increases proportionally from the lower part to the upper part (see the line T22 in FIG. 3). As shown in FIG. 3, the lines T21, T22 have their upper and lower ends joined, and are separate from each other in the intermediate in their height directions. The height indicated by H in FIG. 3 represents the height at which the moving-bed thermometers 31 and the fluidized-bed thermometers 32 are installed. The distance between the lines T21, T22 which are separate from each other in the intermediate in their height directions varies depending on the properties of the wastes W. For example, if the wastes W containing a small amount of water content are supplied, a reduction in the temperature of the moving-bed 21 is suppressed to reduce the distance between the lines T21, T22 which are separate from each other. On the other hand, the fluidized medium 20M that has reached the upper portion of the fluidized-bed 22 flows into the moving-bed 21. In the fluidized-bed 22, the fluidized medium 20M is heated to a temperature which is high enough to appropriately pyrolyze the wastes W when it flows into the moving-bed 21. The fluidized medium 20M that has flowed into the moving-bed 21 receives the supplied wastes W again, and repeats the above thermal reactions in the moving-bed 21 and the fluidized-bed 22.

In the fluidized bed furnace 1 which operates as described above, the controller 80 controls the flow rate of the fluidized-bed air A2 to adjust the temperature of the fluidized-bed 22 to a "predetermined temperature based on the properties of the wastes" in order to prevent the unburned matter (char) Wc from flowing together with the incombustibles Wn into the incombustible passages 18 without being fully separated from the incombustibles Wn. Because an increase or reduction in the fluidized-bed air A2 is related to an increase or reduction in oxygen used to combust the unburned matter (char) Wc, the temperature of the fluidized-bed 22 increases when the flow rate of the fluidized-bed air A2 increases, and decreases when the flow rate of the fluidized-bed air A2 decreases.

On the other hand, the wastes W such as municipal wastes are difficult to combust stably because they vary in terms of calorific values. If the wastes W that are introduced into the fluidized bed furnace 1 per unit time are not stable in quality and quantity, then the amounts of a combustible gas and a combustion gas that are produced fluctuate, resulting in variations in the pressure in the fluidized bed furnace 1. Thus, the fluidized bed furnace 1 becomes difficult to operate stably. In order to suppress fluctuations in the amount of the generated combustible gas, it is preferable to dry and pyrolyze the wastes W in the moving-bed 21 slowly. If the wastes W in the moving-bed 21 is slowly dried and pyrolyzed, then variations in the amount of the pyrolysis residue Wr that enters the fluidized-bed 22 are suppressed, thereby suppressing variations in the amount of the generated combustion gas. For slowly drying and pyrolyzing the wastes W in the moving-bed 21, the temperature of the moving-bed 21 should be as low as possible in a range capable of pyrolyzing the wastes W appropriately.

As described above, in order to perform ideal thermal reactions of the wastes W, the moving-bed 21 and the fluidized-bed 22 are required to have different functions. In addition, in order to continue the thermal reactions of the wastes W, it is essential to continue the circulation of the fluidized medium 20M between the moving-bed 21 and the fluidized-bed 22. From this standpoint, the flow rates of the moving-bed air A1 and the fluidized-bed air A2 that are supplied to the fluidized bed 20 are subjected to restraints. Heretofore, it has been customary to regard a certain temperature difference between the moving-bed and the fluidized-bed as a sign indicative of poor fluidization of the fluidized medium and to uniformize the temperatures of the fluidized bed in response to such a temperature difference. Under this circumstances, it has been difficult to optimize the fluidized bed furnace so as to satisfy the different functions required with respect to the temperatures of the moving-bed and the fluidized-bed. In order to eliminate the above drawback, the fluidized bed furnace 1 according to the present embodiment performs the following control process:

Specifically, by making the pyrolysis residue Wr brittle and separating the unburned matter (char) Wc appropriately from the incombustibles Wn to minimize discharge of the unburned matter out of the fluidized bed furnace 1, a control target temperature of the fluidized-bed 22 (typically a preset temperature of the fluidized-bed 22) is set to the "predetermined temperature based on the properties of the wastes" for combusting the unburned matter (char), and a control target temperature of the moving-bed 21 (typically a preset temperature of the moving-bed 21) is set to a temperature which is lower than the temperature of the fluidized-bed 22 by a predetermined temperature (this temperature difference may hereinafter be referred to as "predetermined temperature difference"), so that the moving-bed 21 and the fluidized-bed 22 have different control target temperatures. For performing thermal reactions of the wastes W as slowly as possible in order to suppress variations in the internal pressure of the fluidized bed furnace 1, the temperature of the moving-bed 21 should preferably be lower than the temperature of the fluidized-bed 22 by not less than 30°C (the predetermined temperature difference should be 30°C or more). For maintaining an appropriate pyrolysis of the wastes W in the moving-bed 21, the temperature of the moving-bed 21 should preferably be lower than the temperature of the fluidized-bed 22 by not more than 100°C (the predetermined temperature difference should be 100°C or less). The predetermined temperature difference may be in the range of 50°C to 80°C. The reason why there is a range in the predetermined temperature difference is that the properties of the introduced wastes W (the conditions for designing the fluidized bed furnace 1) are different depending on the conditions for installing the fluidized bed furnace 1. Specifically, in the case where the wastes W have a high water content, the temperature of the moving-bed 21 is liable to be lower due to evaporative latent heat of water content, and in the case where the wastes W generates a large amount of combustible gas, the temperature of the moving-bed 21 is liable to be higher due to the combustion of the generated combustible gas. That is, the predetermined temperature difference has a different optimum value mainly depending on the properties of the wastes W that are expected to be treated. Although the moving-bed 21 and the fluidized-bed 22 have different control target temperatures, the presence or absence of poor fluidization of the fluidized medium 20M is estimated by detecting whether the temperature difference between the moving-bed 21 and the fluidized-bed 22 falls within a predetermined range or not and also by detecting whether the temperature of the fluidized-bed 22 falls within a predetermined range or not. If the "predetermined temperature difference" between the target control temperatures is not more than 30°C, then the pressure in the fluidized bed furnace 1 is liable to fluctuate as with the conventional fluidized bed furnace, making it difficult to continue stable operation of the fluidized bed furnace. On the other hand, if the "predetermined temperature difference" between the target control temperatures is not less than 100°C, then the pyrolysis residue Wr will not become fully brittle, and thus the unburned matter (char) Wc is more liable to be discharged together with the incombustibles Wn out of the fluidized bed furnace 1. In the present embodiment, the control target temperature of the fluidized-bed 22 is set in the range of 500°C to 650°C. In this manner, by setting the temperature of the fluidized-bed and the control target temperature of the predetermined temperature difference, the concentration of the unburned matter can be controlled in the range of 0 to 0.1 weight %.

A control flow of the fluidized bed furnace 1 having the above structure will be described below.

FIG. 4 is a flowchart of a process for controlling the fluidized bed furnace 1. At the time of start-up of the fluidized bed furnace 1, the controller 80 activates the fluidizing air blower 72 and adjusts the opening degrees of the moving-bed air regulating valves 52 and the fluidized-bed air regulating valves 62 to supply the moving-bed air A1 to the moving-bed 21 and supply the fluidized-bed air A2 to the fluidized-bed 22 (ST1). In the present embodiment, from the standpoint of fluidizing the fluidized medium 20M appropriately, per 1m², the moving-bed air A1 is supplied at a rate of 300 m³N/h and the fluidized-bed air A2 is supplied at a rate of 600 m³N/h. After staring supply of the moving-bed air A1 and the fluidized-bed air A2, the controller 80 ignites the auxiliary burners (not shown) (ST2). When the auxiliary burners (not shown) are ignited, the fluidized medium 20M of the fluidized bed 20 is heated by flames. Since the fluidized medium 20M is fluidized by the fluidizing air, the fluidized medium 20M is heated in its entirety.

When the fluidized medium 20M starts to be heated, the controller 80 judges whether or not the temperature of the fluidized-bed 22 is not less than a fluidized-bed lower limit temperature based on the temperature signals received from the fluidized-bed thermometers 32 (ST3). Here, the fluidized-bed lower limit temperature is a "predetermined temperature based on the properties of the wastes W", and should preferably be not less than about 500°C. In the step (ST3) for judging whether or not the temperature of the fluidized-bed 22 is not less than the fluidized-bed lower limit temperature, if the temperature does not become not less than the fluidized-bed lower limit temperature, then the control goes back again to the step (ST3) for judging whether or not the temperature of the fluidized-bed 22 is not less than the fluidized-bed lower limit temperature. On the other hand, if the temperature of the fluidized-bed 22 becomes not less than the fluidized-bed lower limit temperature, then the wastes W are supplied into the furnace body 10 (ST4).

When the wastes W are supplied, thermal reactions take place in the fluidized bed 20 as described above. Specifically, the wastes W are dried and pyrolyzed in the moving-bed 21 to generate a water vapor and a combustible gas, and is turned into a pyrolysis residue Wr. The pyrolysis residue Wr moves from the bottom of the moving-bed 21 to the bottom of the fluidized-bed 22. When the pyrolysis residue Wr moves on the bottom of the fluidized-bed 22, an unburned matter (char) Wc is separated from incombustibles Wn in the pyrolysis residue Wr. The separated unburned matter (char) Wc ascends together with the fluidized medium 20M in the fluidized-bed 22, and during ascent, the unburned matter (char) Wc is combusted. The unburned matter which is left unburned and ash content which are fine particles are then scattered together with the combustion gas into the freeboard 25. In this thermal reactions of the wastes W, since the moving-bed 21 and the fluidized-bed 22 have different ideal temperatures, as described above, the moving-bed 21 and the fluidized-bed 22 are controlled to ensure different temperatures. The processes of controlling the temperatures of the moving-bed 21 and the fluidized-bed 22 are performed in parallel with each other. For convenience of explanation, the process of controlling the temperature of the fluidized-bed 22 (control goes to a sign A after the waste supplying step (ST4)) will first be described, and then the process of controlling the temperature of the moving-bed 21 (control goes to a sign B after the waste supplying step (ST4)) will be described.

When controlling the temperature of the fluidized-bed 22, the controller 80 judges whether or not the temperature detected by the fluidized-bed thermometer 32 is not less than an upper limit preset value for the control target temperature of the fluidized-bed 22 (ST5). Here, the upper limit preset value for the control target temperature of the fluidized-bed 22 is an upper limit value for the fluidized-bed temperature which can suppress fluctuations, in an allowable range, occurring in the amounts of a water vapor and a combustible gas that are generated when the wastes W are dried and pyrolyzed in the moving-bed 21 after the fluidized medium 20M heated in the fluidized-bed 22 has been moved to the moving-bed 21. The upper limit preset value for the fluidized-bed temperature should preferably be about 650°C or less, and is 640°C in the present embodiment. In the step (ST5) for judging whether or not the temperature detected by the fluidized-bed thermometer 32 is not less than the upper limit preset value, if the temperature becomes not less than the upper limit preset value, then the controller 80 reduces the opening degree of the fluidized-bed air regulating valve 62 to reduce the flow rate of the fluidized-bed air A2 that is supplied to the fluidized-bed 22 (ST6). After reducing the flow rate of the fluidized-bed air A2, the control goes back to the step (ST5) for judging whether or not the temperature detected by the fluidized-bed thermometer 32 is not less than the upper limit preset value.

On the other hand, in the step (ST5) for judging whether or not the temperature detected by the fluidized-bed thermometer 32 is not less than the upper limit preset value, if the temperature does not become not less than the upper limit preset value, then the controller 80 judges whether or not the temperature detected by the fluidized-bed thermometer 32 is not more than a lower limit preset value for the control target temperature of the fluidized-bed 22 (ST7). The lower limit preset value for the control target temperature of the fluidized-bed 22 is a value that is not less than the above fluidized-bed lower limit temperature (500°C). The reason why the upper limit preset value and the lower limit preset value are established for the control target temperature is that changes in the properties of the wastes W that are continuously or intermittently introduced into the fluidized bed furnace 1 should be absorbed and frequent adjustments of the flow rate of the fluidized-bed air A2 should be suppressed. In the step (ST7) for judging whether or not the temperature detected by the fluidized-bed thermometer 32 is not more than the lower limit preset value, if the temperature becomes not more than the lower limit preset value, then the controller 80 opens the fluidized-bed air regulating valve 62 to increase the flow rate of the fluidized-bed air A2 that is supplied to the fluidized-bed 22 (ST8). After an increase of the flow rate of the fluidized-bed air A2, the control goes back again to the step (ST7) for judging whether or not the temperature detected by the fluidized-bed thermometer 32 is not more than the lower limit preset value.

In the step (ST7) for judging whether or not the temperature detected by the fluidized-bed thermometer 32 is not more than the lower limit preset value, if the temperature does not become not more than the lower limit preset value, then the control goes back to the step (ST5) for judging whether or not the temperature detected by the fluidized-bed thermometer 32 is not less than the upper limit preset value. In this manner, the fluidized-bed 22 is maintained between the lower limit preset value and the upper limit preset value. In the present embodiment, after the step (ST4) for supplying the wastes W, the step (ST5) for judging whether or not the temperature detected by the fluidized-bed thermometer 32 is not less than the upper limit preset value is carried out. However, after the step (ST4) for supplying the wastes W, the control may go to the step (ST7) for judging whether or not the temperature detected by the fluidized-bed thermometer 32 is not more than the lower limit preset value, and if the temperature does not become not more than the lower limit preset value, then the control may go to the step (ST5) for judging whether or not the temperature detected by the fluidized-bed thermometer 32 is not less than the upper limit preset value.

Next, the process of controlling the temperature of the moving-bed 21 (control goes to a sign B after the waste supplying step (ST4)), which is carried out in parallel with the process of controlling the temperature of the fluidized-bed 22, will be described. When controlling the temperature of the moving-bed 21, the controller 80 judges whether or not the value (temperature difference) produced by subtracting the temperature detected by the moving-bed thermometer 31 from the temperature detected by the fluidized-bed thermometer 32 is not less than an upper limit (whether the temperature difference is too large or not) (ST9). Here, the predetermined temperature difference for the control target temperature of the moving-bed 21 is, as described above, a temperature determined from the standpoint of performing thermal reactions of the wastes W as slowly as possible in a range for maintaining the pyrolysis of the wastes W in the moving-bed 21. The predetermined temperature difference is determined depending on the size of the fluidized bed furnace 1, the type of the wastes W to be treated, and the like, and is set in the range of about 30°C to 100°C. Further, as described above, since the amounts of water content, combustibles and the like contained in the supplied wastes W vary, upper and lower limits are established for the control target temperature of the moving-bed 21 in anticipation of such variations, so that frequent adjustments of the flow rate of the moving-bed air A1 are suppressed. In the step (ST9) for judging whether or not the temperature difference is not less than the upper limit, if the temperature difference becomes not less than the upper limit, then the controller 80 opens the moving-bed air regulating valve 52 to increase the flow rate of the moving-bed air A1 that is supplied to the moving-bed 21 (ST10). After an increase of the flow rate of the moving-bed air A1, the control goes back to the step (ST9) for judging whether or not the temperature difference is not less than the upper limit.

On the other hand, in the step (ST9) for judging whether or not the temperature difference is not less than the upper limit, if the temperature difference does not become not less than the upper limit, then the controller 80 judges whether or not the temperature difference is not more than the lower limit (ST11). In the step (ST11) for judging whether or not the temperature difference is not more than the lower limit, if the temperature difference becomes not more than the lower limit, then the controller 80 reduces the opening degree of the moving-bed air regulating valve 52 to reduce the flow rate of the moving-bed air A1 that is supplied to the moving-bed 21 (ST12). After a reduction of the flow rate of the moving-bed air A1, the control goes back to the step (ST11) for judging whether or not the temperature difference is not more than the lower limit.

In the step (ST11) for judging whether or not the temperature difference is not more than the lower limit, if the temperature difference does not become not more than the lower limit, then the control goes back to the step (ST9) for judging whether or not the temperature difference is not less than the upper limit. In this manner, the moving-bed 21 is maintained at a temperature which is lower than the temperature of the fluidized-bed 22 by a predetermined temperature. In the present embodiment, after the step (ST4) for supplying the wastes W, the step (ST9) for judging whether or not the temperature difference is not less than the upper limit is carried out. However, after the step (ST4) for supplying the wastes W, the control may go to the step (ST11) for judging whether or not the temperature difference is not more than the lower limit, and if the temperature difference does not become not more than the lower limit, then the control may go to the step (ST9) for judging whether or not the temperature difference is not less than the upper limit.

As described above, in the fluidized bed furnace 1 according to the present embodiment, the temperature of the moving-bed 21 and the temperature of the fluidized-bed 22 are individually controlled, and the moving-bed 21 and the fluidized-bed 22 are controlled to ensure respective ideal temperatures, and thus the unburned matter (char) can be combusted in the fluidized-bed 22 according to the predetermined standards and the wastes W can be pyrolyzed slowly in the moving-bed 21, so that the wastes W which has such properties as to be liable to combust unstably can be subjected to thermal reactions appropriately.

Next, a fluidized bed furnace 2 according to a second embodiment of the present invention will be described with reference to FIGS. 5A and 5B. FIGS. 5A and 5B show a general structure of the fluidized bed furnace 2. FIG. 5A is a vertical cross-sectional view of the fluidized bed furnace 2, and FIG. 5B is a detailed view of an encircled region B in FIG. 5A. The fluidized bed furnace 2 according to the present embodiment includes a deposition prevention block 91 in addition to the structure of the fluidized bed furnace 1 (see FIG. 1). As described with respect to the fluidized bed furnace 1 (see FIG. 1), when the wastes W are dried and pyrolyzed slowly in order to suppress variations in the amount of gases generated by the pyrolysis of the wastes W, the fluidized medium 20M also moves slowly in the moving-bed 21. Thus, the incombustibles Wn in the wastes W may possibly be deposited in the moving-bed 21. Particularly, in the present embodiment, because the moving-bed 21 is formed centrally between both of the fluidized-beds 22, if the supplied amount of the moving-bed air A1 is minimized, the incombustibles Wn in the form of wires or the like that are liable to become entangled tends to be deposited in the central region of the moving-bed 21.

The deposition prevention block 91 is provided in the fluidized bed furnace 2 in view of the above problem. The deposition prevention block 91 is disposed in a row like a dam along the peak (the upper end of the partition plate 141) of the moving-bed floorboards 11 where the moving-bed floorboards 11 join at different angles. The deposition prevention block 91 is configured to have side faces 91s, 91t which are inclined to prevent the incombustibles from being deposited thereon in its vertical cross section (cross section shown in FIG. 5A). In the present embodiment, the lower side face 91s is inclined to the horizontal plane (indicated by the two-dot-and-dash line in FIG. 5B) at an angle θ ranging from 60° to 80°, and the upper side face 91t is inclined to the horizontal plane at an angle ranging from 45° to 80°. In the present embodiment, the height of the deposition prevention block 91 is substantially the same as the height of the fluidized bed 20, and the sharply inclined side face 91s extends to the upper portion as high as possible. Further, the deposition prevention block 91 is provided so as not to cover the moving-bed floorboards 11 in their entirety, but to leave at least one row of the moving-bed air supply ports 11h (see FIG. 2) in both of the moving-bed floorboards 11 close to the fluidized-bed floorboards 12. Because at least one row of the moving-bed air supply ports 11h (see FIG. 2) for discharging the moving-bed air A1 having a relatively small mass flow rate is formed, the formation of a circulating flow of the fluidized medium 20M between the moving-bed 21 and the fluidized-bed 22 can be maintained.

The fluidized bed furnace 2 is identical in structure to the fluidized bed furnace 1 (see FIG. 1) except for installation of the deposition prevention block 91. In the fluidized bed furnace 2 having the above structure, the supply of the moving-bed air A1 and the fluidized-bed air A2, the circulation of the fluidized medium 20M associated with the supply of the moving-bed air A1 and the fluidized-bed air A2, and the control flow (temperature control) are performed in the same manner as the fluidized bed furnace 1 (see FIG. 1). In the fluidized bed furnace 2, even when the wastes W supplied into the moving-bed 21 contain incombustibles Wn in the form of wires that are liable to be deposited, the incombustibles Wn are guided by the side faces 91t, 91s of the deposition prevention block 91 and led smoothly to the fluidized-beds 22, and thus the incombustibles Wn are prevented from being deposited in the moving-bed 21.

In the fluidized bed furnace 2 described above, the deposition prevention block 91 is configured separately from the moving-bed floorboards 11 and is disposed on the moving-bed floorboards 11. However, the moving-bed floorboards 11 themselves may be inclined to the extent that the incombustibles Wn are prevented from being deposited thereon. In such a modification, moving-bed air supply ports 11h (see FIG. 2) may be formed in the sharply inclined faces. If the moving-bed air supply ports 11h are formed in the sharply inclined faces of the moving-bed floorboards 11, then it is possible to adjust the flow rate of the moving-bed air A1 easily. If the moving-bed air supply ports 11h are not formed in the sharply inclined faces of the moving-bed floorboards 11, then the moving-bed floorboards 11 may be simpler in structure.

### Inventive Examples

Inventive examples of the present invention will be described below. However, the present invention should not be interpreted as being limited to the inventive examples. According to the following inventive examples, in the fluidized bed furnace 1 shown in FIGS. 1 and 2, the concentrations of carbon monoxide and oxygen in the exhaust gas generated when wastes W were incinerated under different types of wastes and different conditions were measured. The fluidized bed furnace 1 used in the inventive examples had the floorboard 112 whose planar dimensions include a width of 3000 mm and a depth of 1500 mm. Specifically, the moving-bed floorboards 11 and the fluidized-bed floorboards 12, each having a width of 750 mm and a depth of 1500 mm, were arranged in the order of a fluidized-bed floorboard 12, a moving-bed floorboard 11, a moving-bed floorboard 11, and a fluidized-bed floorboard 12 in the width direction, thereby making up the floorboard 112. The moving-bed floorboards 11 and the fluidized-bed floorboards 12 are inclined to the horizontal plane by 15°. The concentrations of carbon monoxide and oxygen in the exhaust gas were measured after the wastes W were incinerated in the fluidized bed furnace 1 and combustion gas was discharged from the exhaust port 16 and then cooled by a cooling device (not shown).

Table 1 and Table 2 show treatment conditions and measured results. The treatment conditions include the flow rate of the moving-bed air A1 supplied to the moving-bed 21, the flow rate of the fluidized-bed air A2 supplied to the fluidized-bed 22, the temperature of the moving-bed 21 detected by the moving-bed thermometer 31, and the temperature of the fluidized-bed 22 detected by the fluidized-bed thermometer 32. The flow rate of the moving-bed air A1 and the flow rate of the fluidized-bed air A2 are flow rates in a standard state per unit area (1 m²) of the floorboard 112. The concentrations of carbon monoxide (CO concentrations) shown in Table 1 and Table 2 represent values obtained from measured concentrations of carbon monoxide and oxygen by conversion using an oxygen concentration of 12 %. The measured concentration of oxygen is a concentration under dry gas base. The results indicated in Table 1 were obtained when the wastes W mainly containing a screen sludge (plastic-based insoluble derived from laminated waste paper) and refuse (paper and waste plastics) were treated. The results indicated in Table 2 were obtained when municipal wastes were treated as the wastes W.

**[Table 1]**

| | Fluidized-bed flow rate [m³N/m²h] | Moving-bed flow rate [m³N/m²h] | Fluidized-bed temperature [°C] | Moving-bed temperature [°C] | CO concentration [ppm] | O₂ concentration [%] |
|---|---|---|---|---|---|---|
| Inventive example 1 | 1050 | 250 | 640 | 610 | 19 | 7.4 |
| Inventive example 2 | 450 | 200 | 620 | 545 | 15 | 7.8 |
| Comparative example 1 | 950 | 350 | 635 | 635 | 76 | 7.8 |

**[Table 2]**

| | Fluidized-bed flow rate [m³N/m²h] | Moving-bed flow rate [m³N/m²h] | Fluidized-bed temperature [°C] | Moving-bed temperature [°C] | CO concentration [ppm] | O₂ concentration [%] |
|---|---|---|---|---|---|---|
| Inventive example 3 | 1600 | 300 | 551 | 519 | 3 | 6.8 |
| Comparative example 2 | 1500 | 350 | 575 | 575 | 13 | 7.1 |

According to Inventive example 1, when the flow rates of the moving-bed air A1 and the fluidized-bed air A2 were regulated to cause the control target temperature for the fluidized-bed 22 to be 640°C and to cause the control target temperature for the moving-bed 21 to be lower than the control target temperature for the fluidized-bed 22 by 30°C (at this time, the flow rate of the moving-bed air A1 was 250 m³N/m²h and the flow rate of the fluidized-bed air A2 was 1050 m³N/m²h), the detected CO concentration by conversion using the oxygen concentration of 12 % was 19 ppm.

According to Inventive example 2, when the flow rates of the moving-bed air A1 and the fluidized-bed air A2 were regulated to cause the control target temperature for the fluidized-bed 22 to be 620°C and to cause the control target temperature for the moving-bed 21 to be lower than the control target temperature for the fluidized-bed 22 by 75°C (at this time, the flow rate of the moving-bed air A1 was 200 m³N/m²h and the flow rate of the fluidized-bed air A2 was 450 m³N/m²h), the detected CO concentration by conversion using the oxygen concentration of 12 % was 15 ppm.

According to Comparative example 1, when the flow rates of the moving-bed air A1 and the fluidized-bed air A2 were regulated to cause both the control target temperature for the fluidized-bed 22 and the control target temperature for the moving-bed 21 to be 635°C (at this time, the flow rate of the moving-bed air A1 was 350 m³N/m²h and the flow rate of the fluidized-bed air A2 was 950 m³N/m²h), the detected CO concentration by conversion using the oxygen concentration of 12 % was 76 ppm.

In Table 1, the CO concentration by conversion using the oxygen concentration of 12 % according to Inventive examples 1, 2 wherein the moving-bed air A1 was supplied to the moving-bed 21 at a flow rate for causing the control target temperature for the moving-bed 21 to be lower than the control target temperature for the fluidized-bed 22 by a predetermined temperature, was 75 to 80 % lower than the CO concentration by conversion using the oxygen concentration of 12 % according to Comparative example 1 wherein the moving-bed air A1 was supplied to the moving-bed 21 at a flow rate for causing the control target temperature for the moving-bed 21 to be equal to the control target temperature for the fluidized-bed 22. This indicates that incomplete combustion was more suppressed and combustion was more stable in Inventive examples 1, 2 than in Comparative example 1.

According to Inventive example 3, when the flow rates of the moving-bed air A1 and the fluidized-bed air A2 were regulated to cause the control target temperature for the fluidized-bed 22 to be 551°C and to cause the control target temperature for the moving-bed 21 to be lower than the control target temperature for the fluidized-bed 22 by 32°C (at this time, the flow rate of the moving-bed air A1 was 300 m³N/m²h and the flow rate of the fluidized-bed air A2 was 1600 m³N/m²h), the detected CO concentration by conversion using the oxygen concentration of 12 % was 3 ppm.

According to Comparative example 2, when the flow rates of the moving-bed air A1 and the fluidized-bed air A2 were regulated to cause both the control target temperature for the fluidized-bed 22 and the control target temperature for the moving-bed 21 to be 575°C (at this time, the flow rate of the moving-bed air A1 was 350 m³N/m²h and the flow rate of the fluidized-bed air A2 was 1500 m³N/m²h), the detected CO concentration by conversion using the oxygen concentration of 12 % was 13 ppm.

In Table 2, the CO concentration by conversion using the oxygen concentration of 12 % according to Inventive example 3 wherein the moving-bed air A1 was supplied to the moving-bed 21 at a flow rate for causing the control target temperature for the moving-bed 21 to be lower than the control target temperature for the fluidized-bed 22 by a predetermined temperature, was about 77 % lower than the CO concentration by conversion using the oxygen concentration of 12 % according to Comparative example 2 wherein the moving-bed air A1 was supplied to the moving-bed 21 at a flow rate for causing the control target temperature for the moving-bed 21 to be equal to the control target temperature for the fluidized-bed 22. This indicates that incomplete combustion was more suppressed and combustion was more stable in Inventive example 3 than in Comparative example 2.

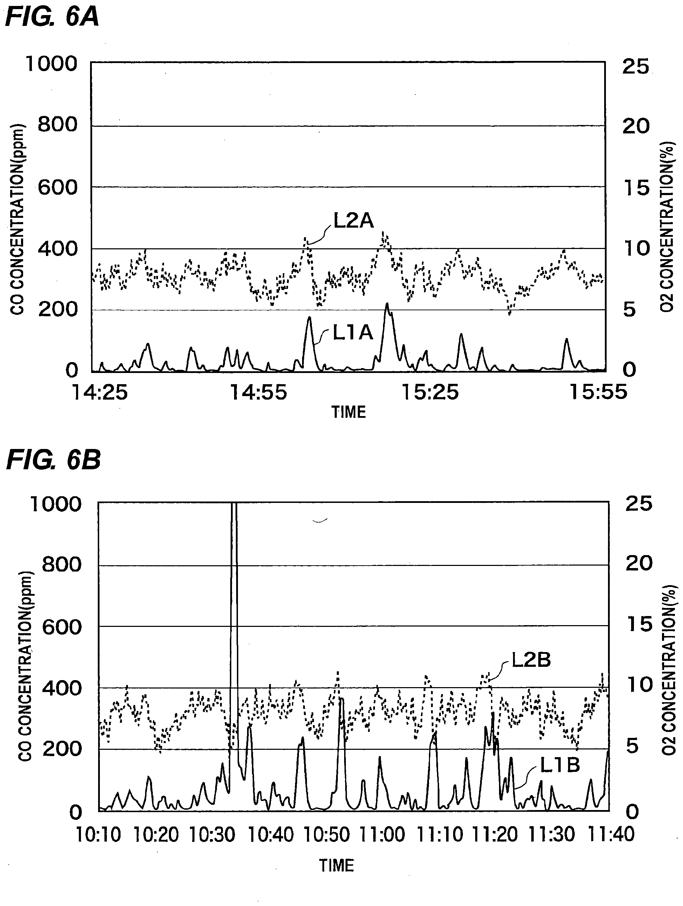

FIGS. 6A and 6B show time-dependent trend data of the concentrations of carbon monoxide and oxygen. FIG. 6A shows time-dependent trend data of the concentrations of carbon monoxide and oxygen according to Inventive example 1, and FIG. 6B shows time-dependent trend data of the concentrations of carbon monoxide and oxygen according to Comparative example 1. In FIG. 6A, the line L1A shown by solid line represents the concentration of carbon monoxide, and the line L2A shown by broken line represents the concentration of oxygen. In FIG. 6B, the line L1B shown by solid line represents the concentration of carbon monoxide, and the line L2B shown by broken line represents the concentration of oxygen. A comparison of FIGS. 6A and 6B clearly shows that the line L1B representing Comparative example 1 has large peaks in a scattered manner and numerical values of the line L1B are greater as a whole than those of the line L1A representing Inventive Example 2, and that the line L2A representing Inventive example 2 has a smaller range of fluctuations than the line L2B representing Comparative example 1. This indicates that combustion is more stable in Inventive example 2 than in Comparative example 1. A comprehensive review of Inventive example 2 and Comparative example 1 clearly shows that Inventive example 2 gave rise to more stable combustion and generated less carbon monoxide than Comparative example 1, and the wastes W that are liable to combust unstably were combusted stably.

### Industrial Applicability

The present invention is applicable to a fluidized bed furnace and a method for treating wastes, which are capable of continuously performing appropriate treatment of wastes such as municipal wastes that are liable to combust unstably and are non-uniform in quality and quantity.

### Reference Signs List

- 1: fluidized bed furnace
- 11: moving-bed floorboard
- 11h: moving-bed air supply port
- 12: fluidized-bed floorboard
- 12h: fluidized-bed air supply port
- 20: fluidized bed
- 20M: fluidized medium
- 21: moving-bed
- 22: fluidized-bed
- 25: freeboard
- 31: moving-bed thermometer
- 32: fluidized-bed thermometer
- 50: moving-bed air supply means
- 51: moving-bed air pipe
- 52: moving-bed air regulating valve
- 60: fluidized-bed air supply means
- 61: fluidized-bed air pipe
- 62: fluidized-bed air regulating valve
- 70: fluidizing air supply means
- 80: controller
- A1: moving-bed air
- A2: fluidized-bed air
- W: wastes
- Wc: unburned matter (char)
- Wn: incombustibles
- Wr: pyrolysis residue

## Claims

1. A fluidized bed furnace (1) comprising:
a fluidized bed (20) having a moving-bed (21) for taking supplied wastes (W) into a fluidized medium (20M) and pyrolyzing the wastes (W) into a pyrolysis residue while moving the wastes (W) downwardly together with the fluidized medium (20M), and a fluidized-bed (22) for receiving the fluidized medium (20M) and the pyrolysis residue from the moving-bed (21) and combusting at least part of the pyrolysis residue while moving the fluidized medium (20M) upwardly, the fluidized medium (20M) being circulated between the moving-bed (21) and the fluidized-bed (22);
a moving-bed floorboard (11) having moving-bed gas supply ports (11h) formed therein for supplying a moving-bed gas to fluidize the fluidized medium (20M) in the moving-bed (21);
a fluidized-bed floorboard (12) having fluidized-bed gas supply ports (12h) formed therein for supplying a fluidized-bed gas to fluidize the fluidized medium (20M) in the fluidized-bed (22), the fluidized-bed gas containing oxygen used to combust the at least part of the pyrolysis residue;
a moving-bed gas supply means (50) for delivering the moving-bed gas to the moving-bed (21), the moving-bed gas supply means (50) being capable of regulating a flow rate of the moving-bed gas; and
a fluidized-bed gas supply means (60) for delivering the fluidized-bed gas to the fluidized-bed (22), the fluidized-bed gas supply means (60) being capable of regulating a flow rate of the fluidized-bed gas; the fluidized bed furnace **characterized by**:
a moving-bed temperature detector (31) for detecting a temperature of the moving-bed (21);
a fluidized-bed temperature detector (32) for detecting a temperature of the fluidized-bed (22); and
a controller (80) configured to control the fluidized-bed gas supply means (60) to regulate the flow rate of the fluidized-bed gas supplied to the fluidized-bed (22) to control the temperature of the fluidized-bed (22) in order to cause the temperature detected by the fluidized-bed temperature detector (32) to become a predetermined temperature, and configured to control the moving-bed gas supply means (50) to regulate the flow rate of the moving-bed gas supplied to the moving-bed (21) to control the temperature of the moving-bed (21) in order to cause the temperature detected by the moving-bed temperature detector (31) to be lower than the temperature detected by the fluidized-bed temperature detector (31) by a predetermined temperature.

2. The fluidized bed (1) furnace according to claim 1, wherein the predetermined temperature of the fluidized-bed (22) is in the range of 500°C to 650°C.

3. The fluidized bed furnace (1) according to claim 1, wherein the fluidized-bed (22) and the moving-bed (21) have a predetermined temperature difference in the range of 30°C to 100°C.

4. The fluidized bed furnace (1) according to claim 1, wherein the fluidized-beds (22) are disposed on both sides of the moving-bed (21) in vertical cross section, and the moving-bed floorboard (11) has an upwardly convex shape having a high central part and descending from the high central part toward the fluidized-beds (22) disposed on the both sides of the moving-bed (21) in vertical cross section, the moving-bed floorboard (11) and the fluidized-bed floorboard (12) adjacent to each other being disposed continuously.

5. The fluidized bed furnace (1) according to claim 4, wherein the central part of the moving-bed floorboard (11) in vertical cross section is inclined to prevent incombustibles from being deposited in the moving-bed (21).

6. A method for treating wastes in a fluidized bed (20) in which a fluidized medium (20M) is circulated between a moving-bed (21) having the fluidized medium (20M) descending therein and a fluidized-bed (22) having the fluidized medium (20M) ascending therein, comprising:
a gas supply step for supplying a moving-bed gas to the moving-bed (21) and supplying a fluidized-bed gas to the fluidized-bed (22);
waste supplying step for supplying wastes (W) into the moving-bed (21); and
a thermal reaction step for pyrolyzing the supplied wastes (W) into a pyrolysis residue in the moving-bed (21) by the heated fluidized medium (20M), and combusting at least part of the pyrolysis residue in the fluidized-bed (22); the method being **characterized by**:
a fluidized-bed gas flow rate regulating step for regulating a flow rate of the fluidized-bed gas supplied to the fluidized-bed (22) in order to cause the temperature of the fluidized-bed (22) to be a predetermined temperature; and
a moving-bed gas flow rate regulating step for regulating a flow rate of the moving-bed gas supplied to the moving-bed (21) in order to cause the temperature of the moving-bed (21) to be lower than the temperature of the fluidized-bed (22) by a predetermined temperature.

7. The method for treating wastes according to claim 6, wherein the predetermined temperature of the fluidized-bed (22) is in the range of 500°C to 650°C.

8. The method for treating wastes according to claim 6, wherein the fluidized-bed (22) and the moving-bed (21) have a predetermined temperature difference in the range of 30°C to 100°C.

## Patentansprüche

1. Wirbelbettofen (1), der Folgendes aufweist:
ein Wirbelbett (20) mit einem Wanderbett (21) zum Aufnehmen von geliefertem Abfall (W) in einem fluidisiertem Medium bzw. Wirbelgut (20M) und zum Pyrolisieren des Abfalls (W) zu einem Pyrolyserest, während der Abfall sich zusammen mit dem Wirbelmedium nach unten bewegt, und mit einem Wirbelbett (22) zum Aufnehmen des Wirbelmediums und des Pyrolyserestes aus dem Wanderbett (21) und zum Verbrennen von mindestens einem Teil des Pyrolyserestes, während das Wirbelmedium (20M) nach oben bewegt wird, wobei das Wirbelmedium (20M) zwischen dem Wanderbett (21) und dem Wirbelbett (22) zirkuliert wird;
eine Bodenplatte (11) des Wanderbettes mit Gaslieferanschlüssen (11h) für das Wanderbett, die darin ausgebildet sind, um ein Wanderbettgas zu liefern, um das Wirbelmedium (20M) in dem Wanderbett (21) zu fluidisieren;
eine Bodenplatte (12) für das Wirbelbett mit Gaslieferanschlüssen (12h) für das Wirbelbett, die darin ausgebildet sind, um ein Wirbelbettgas zu liefern, um das Wirbelmedium (20M) in dem Wirbelbett (22) zu fluidisieren, wobei das Wirbelbettgas Sauerstoff enthält, der verwendet wird, um zumindest einen Teil des Pyrolyserestes zu verbrennen;
Wanderbettgasliefermittel (50) zum Liefern des Wanderbettgases an das Wanderbett (21), wobei die Wanderbettgasliefermittel (50) eine Flussrate des Wanderbettgases regeln können; und
Wirbelbettgasliefermittel (60) zum Liefern des Wirbelbettgases an das Wirbelbett (22), wobei die Wirbelbettgasliefermittel (60) eine Flussrate des Wirbelbettgases regulieren können; wobei der Wirbelbettofen **gekennzeichnet ist durch**:
einen Wanderbetttemperaturdetektor (31) zum Detektieren einer Temperatur des Wanderbettes (21);
einen Wirbelbetttemperaturdetektor (32) zum Detektieren einer Temperatur des Wirbelbettes (22); und
eine Steuervorrichtung (80), die konfiguriert ist, um die Wirbelbettgasliefermittel (60) zu steuern, um die Flussrate des Wirbelbettgases, die an das Wirbelbett (22) geliefert wird, zu regeln, um die Temperatur des Wirbelbettes (22) zu steuern, um zu bewirken, dass die Temperatur, die von dem Wirbelbetttemperaturdetektor (32) detektiert wird, eine vorbestimmte Temperatur wird, und die konfiguriert ist, um die Wanderbettgasliefermittel (50) zu steuern, um die Flussrate des Wanderbettgases zu regulieren, welches an das Wanderbett (21) geliefert wird, um die Temperatur des Wanderbettes (21) zu steuern, um zu bewirken, dass die von dem Wanderbetttemperaturdetektor (31) detektierte Temperatur um eine vorbestimmte Temperatur niedriger ist als die Temperatur, die von dem Wanderbetttemperaturdetektor (31) detektiert wird.

2. Wirbelbettofen (1) nach Anspruch 1, wobei die vorbestimmte Temperatur des Wirbelbettes (22) im Bereich von 500 °C bis 650 °C ist.

3. Wirbelbettofen (1) nach Anspruch 1, wobei das Wirbelbett (22) und das Wanderbett (21) eine vorbestimmte Temperaturdifferenz im Bereich von 30 °C bis 100 °C haben.

4. Wirbelbettofen (1) nach Anspruch 1, wobei die Wirbelbetten (22) im vertikalen Querschnitt auf beiden Seiten des Wanderbettes (21) angeordnet sind, und wobei die Bodenplatte (11) des Wanderbettes eine nach oben konvexe Form mit einem hohen Mittelteil hat und von dem hohen Mittelteil zu den Wirbelbetten (22) abfällt, die im vertikalen Querschnitt auf beiden Seiten des Wanderbettes (21) angeordnet sind, wobei die Bodenplatte (11) des Wanderbettes und die Bodenplatte (12) des Wirbelbettes benachbart zu einander in kontinuierlicher bzw. übergehender Weise angeordnet sind.

5. Wirbelbettofen (1) nach Anspruch 4, wobei der mittlere Teil der Bodenplatte (11) des Wanderbettes im vertikalen Querschnitt geneigt ist, um zu verhindern, dass nicht brennbare Stoffe in dem Wanderbett (21) abgelagert werden.

6. Verfahren zum Behandeln von Abgas in einem Wirbelbett (20), in welchem ein fluidisiertes Medium bzw. Wirbelmedium (20M) zwischen einem Wanderbett (21), in dem das Wirbelmedium (20M) absinkt, und einem Wirbelbett (22) zirkuliert wird, in welchem das Wirbelmedium (20M) aufsteigt, welches Folgendes aufweist:
einen Gaslieferschritt zum Liefern eines Wanderbettgases an das Wanderbett (21) und zum Liefern eines Wirbelbettgases an das Wirbelbett (22);
einen Abfalllieferschritt zum Liefern von Abfall (W) in das Wanderbett (21); und
einen Thermoreaktionsschritt zum Pyrolisieren des gelieferten Abfalls (W) in einen Pyrolyserest in dem Wanderbett (21) durch das aufgeheizte Wirbelmedium (20M), und zum Verbrennen von zumindest einem Teil des Pyrolyserestes in dem Wirbelbett (22);
wobei das Verfahren **gekennzeichnet ist durch**:
einen Wirbelbettgasflussratenregulierungsschritt zum Regulieren einer Flussrate des Wirbelbettgases, welches zu dem Wirbelbett (22) geliefert wird, um zu bewirken, dass die Temperatur des Wirbelbettes (22) eine vorbestimmte Temperatur ist; und
einen Wanderbettgasflussratenregulierungsschritt zum Regulieren eines Flusses des Wanderbettgases, welches an das Wanderbett (21) geliefert wird, um zu bewirken, dass die Temperatur des Wanderbettes (21) um eine vorbestimmte Temperatur niedriger ist als die Temperatur des Wirbelbettes (22).

7. Verfahren zum Behandeln von Abfall nach Anspruch 6, wobei die vorbestimmte Temperatur des Wirbelbettes (22) im Bereich von 500 °C bis 650 °C ist.

8. Verfahren zum Behandeln von Abfall nach Anspruch 6, wobei das Wirbelbett (22) und das Wanderbett (21) eine vorbestimmte Temperaturdifferenz im Bereich von 30 °C bis 100 °C haben.

## Revendications

1. Four à lit fluidisé (1) comprenant :
un lit fluidisé (20) comportant un lit mobile (21) pour prendre des déchets fournis (W) dans un milieu fluidisé (20M) et faire subir une pyrolyse aux déchets (W) pour obtenir un résidu de pyrolyse pendant un mouvement des déchets (W) vers le bas conjointement avec le milieu fluidisé (20M), et un lit fluidisé (22) pour recevoir le milieu fluidisé (20M) et le résidu de pyrolyse à partir du lit mobile (21), et faire brûler au moins une partie du résidu de pyrolyse pendant le mouvement du milieu fluidisé (20M) vers le haut, le milieu fluidisé (20M) étant mis en circulation entre le lit mobile (21) et le lit fluidisé (22) ;
une plaque de plancher de lit mobile (11) comportant des accèsde fourniture de gaz de lit mobile (11h) formés dedans pour fournir du gaz de lit mobile pour fluidiser le milieu fluidisé (20M) dans le lit mobile (21) ;
une plaque de plancher de lit fluidisé (12) comportant des accèsde fourniture de gaz de lit fluidisé (12h) formés dedans pour fournir du gaz de lit fluidisé pour fluidiser le milieu fluidisé (20M) dans le lit fluidisé (22), le gaz de lit fluidisé contenant de l'oxygène utilisé pour faire brûler ladite au moins une partie du résidu de pyrolyse ;
des moyens de fourniture de gaz de lit mobile (50) pour fournir le gaz de lit mobile (21) au lit mobile (21), les moyens de fourniture de gaz de lit mobile (50) étant capables de réguler le débit du gaz de lit mobile ; et
des moyens de fourniture de gaz de lit fluidisé (60) pour fournir le gaz de lit fluidisé au lit fluidisé (22), les moyens de fourniture de gaz de lit fluidisé (60) étant capables de réguler le débit du gaz de lit fluidisé, le four à lit fluidisé étant **caractérisé par** :
un détecteur de température de lit mobile (31) pour détecter une température du lit mobile (21) ;
un détecteur de température de lit fluidisé (32) pour détecter une température du lit fluidisé (22) ; et
un contrôleur (80) agencé pour contrôler les moyens de fourniture de gaz de lit fluidisé (60) pour réguler le débit du gaz de lit fluidisé fourni au lit fluidisé (22) pour contrôler la température du lit fluidisé (22) afin de faire en sorte que la température détectée par le détecteur de température de lit fluidisé (32) devienne une température prédéterminée, et agencé pour contrôler les moyens de fourniture de gaz de lit mobile (50) pour réguler le débit du gaz de lit mobile fourni au lit mobile (21) pour contrôler la température du lit mobile (21) afin de faire en sorte que la température détectée par le détecteur de température de lit mobile (31) soit inférieure à la température détectée par le détecteur de température de lit fluidisé (31) d'une température prédéterminée.

2. Four à lit fluidisé (1) selon la revendication 1, dans lequel la température prédéterminée du lit fluidisé (22) est dans la plage de 500 °C à 650 °C.

3. Four à lit fluidisé (1) selon la revendication 1, dans lequel le lit fluidisé (22) et le lit mobile (21) ont une différence de température prédéterminée dans la plage de 30 °C à 100 °C.

4. Four à lit fluidisé (1) selon la revendication 1, dans lequel les lits fluidisés (22) sont disposés sur les deux côtés du lit mobile (21) dans unesection transversale verticale, et la plaque de plancher de lit mobile (11) a une forme convexe vers le haut ayant une partie centrale haute et descendant à partir de la partie centrale haute en direction des lits fluidisés (22) disposés sur les deux côtés du lit mobile (21) dans la sectiontransversale verticale, la plaque de plancher de lit mobile (11) et la plaque de plancher de lit fluidisé (12) adjacentes entre elles étant disposées de façon continue.

5. Four à lit fluidisé (1) selon la revendication 4, dans lequel la partie centrale de la plaque de plancher de lit mobile (11) dans la section transversale verticale est inclinée pour empêcher que des éléments non combustibles soient déposés dans le lit mobile (21).

6. Procédé pour traiter des déchets dans un lit fluidisé (20) dans lequel un milieu fluidisé (20M) est mis en circulation entre un lit mobile (21) ayant le milieu fluidisé (20M) qui descend dedans et un lit fluidisé (22) ayant le milieu fluidisé (20M) qui monte dedans, comprenant :
une étape de fourniture de gaz pour fournir un gaz de lit mobile au lit mobile (21) et fournir un gaz de lit fluidisé au lit fluidisé (22) ;
une étape de fourniture de déchets pour fournir des déchets (W) dans le lit mobile (21) ; et
une étape de réaction thermique pour faire subir une pyrolyse aux déchets fournis (W) pour obtenir un résidu de pyrolyse dans le lit mobile par le milieu fluidisé (20M) chauffé, et faire brûler au moins une partie du résidu de pyrolyse dans le lit fluidisé (22) ; le procédé étant caractériser par :
une étape de régulation de débit de gaz de lit fluidisé pour réguler un débit du gaz de lit fluidisé fourni au lit fluidisé (22) afin de faire en sorte que la température du lit fluidisé (22) soit une température prédéterminée ; et
une étape de régulation de débit de gaz de lit mobile pour réguler le débit du gaz de lit mobile fourni au lit mobile (21) afin de faire en sorte que la température du lit mobile (21) soit inférieure à la température du lit fluidisé (22) d'une température prédéterminée.

7. Procédé pour traiter des déchets selon la revendication 6, dans lequel la température prédéterminée du lit fluidisé (22) est dans la plage de 500 °C à 650 °C.

8. Procédé pour traiter des déchets selon la revendication 6, dans lequel le lit fluidisé (22) et le lit mobile (21) ont une différence de température prédéterminée dans la plage de 30 °C à 100 °C.
